# (19) European Patent Office

Europäisches Patentamt

European Patent Office

Office européen des brevets

(11) **EP 1 100 326 B1**

(12) **EUROPEAN PATENT SPECIFICATION**

(45) Date of publication and mention
of the grant of the patent:
**23.04.2003 Bulletin 2003/17**

(51) Int Cl.$^7$: **A01N 25/28**, B01J 13/16

(21) Application number: **99936786.5**

(86) International application number:
**PCT/GB99/02463**

(22) Date of filing: **28.07.1999**

(87) International publication number:
**WO 00/005951 (10.02.2000 Gazette 2000/06)**

(54) **BASE-TRIGGERED RELEASE MICROCAPSULES**

MIKROKAPSELN MIT VON BASEN AUSGELÖSTE FREISETZUNG

MICROCAPSULES A LIBERATION DECLENCHEE PAR BASE

(84) Designated Contracting States:
**AT BE CH CY DE DK ES FI FR GB GR IE IT LI LU MC NL PT SE**

(30) Priority: **29.07.1998 US 126031**

(43) Date of publication of application:
**23.05.2001 Bulletin 2001/21**

(73) Proprietor: **Syngenta Limited
Guildford Surrey GU2 7YH (GB)**

(72) Inventors:
• **VAN KOPPENHAGEN, Juanita, E.
Richmond, CA 94804-4610 (US)**
• **SCHER, Herbert, Benson
Richmond, CA 94804-4610 (US)**
• **LEE, Kuo-Shin
Richmond, CA 94804-4610 (US)**
• **SHIRLEY, Ian, M.
Bracknell, Berkshire (GB)**
• **WADE, Philip, P.
Bracknell, Berkshire (GB)**
• **FOLLOWS, Richard, R., Zeneca Specialities
Blackley, Manchester (GB)**

(74) Representative: **Ricks, Michael James et al
Syngenta Limited
Intellectual Property Department
Jealotts Hill International Research Centre
P.O. Box 3538
Bracknell, Berkshire RG42 6EY (GB)**

(56) References cited:
**EP-A- 0 823 993          US-A- 5 332 584**

## Description

This invention pertains to certain microencapsulated compositions which contain an active ingredient encapsulated within a polymeric shell wall, particularly an aminoplast shell wall, in which the shell wall contains an ester containing a cross-linking unit, as well as processes for the production of such microcapsules, and methods for their use. The base-sensitive cross-linking unit triggers release of the encapsulated contents on exposure of the capsules to basic conditions.

The microcapsules of this invention have been found particularly suitable for use in producing encapsulated formulations of pesticides, for both agricultural and non-agricultural use. They are also suitable for encapsulated formulation of non-pesticidal agricultural chemicals such as plant growth regulators, insect growth regulators, fertilizers, and other agriculturally useful materials. In addition, they are useful for encapsulation of materials outside the agricultural field such as detergent powders.

In many instances, particularly in agriculture, the object of producing microencapsulated compositions has been to provide controlled release of the encapsulated active ingredient, and particularly to provide a release for longer term efficacy so that the active ingredient is released over a period of time and is available throughout the effective period. This is particularly significant for pesticides or other ingredients which are degraded or decomposed over a relatively short period of time under certain environmental conditions. Use of microencapsulated compositions in these situations provides effective activity of the encapsulated ingredient over a longer period of time since it will be released continuously into the environment in the amount needed rather than in one large initial dose.

Currently, microencapsulated pesticides are used primarily as preemergence pesticides, that is, they are applied to soil prior to the emergence of vegetation or the appearance of insects, so that they are available to kill or control newly emerged weed species or insects in their larval stages. Again, in those applications, relatively slow release rates are desired so that the pesticide is released into the environment over a period of time, usually over at least several weeks.

Microencapsulated formulations for quick release are known in a number of other applications, such as the printing and xerography industries, in which materials such as inks, pigments, toner particles, etc., are microencapsulated and released quickly upon application of physical force or heat. Microcapsules with comparatively quick release could have utility in agriculture in situations in which controlled release is not desired, but microencapsulation of the active ingredient is desired for any of a number of reasons. For example, microencapsulation can be desired to protect against dermal effects of pesticides during their handling (for instance, production, storage or loading into spray equipment). However, a comparatively quick release of the pesticide may be desired in order to make the pesticide readily available to control a pest, as is usually the case with nonencapsulated or non-controlled release formulations such as solutions, emulsions, dusts, powders, granules, etc. Another instance in which it is desirable to have encapsulation but comparatively quick release of a pesticide is in the production of pesticidal products containing two active ingredients which may be reactive with each other or otherwise incompatible in a single system.

Microencapsulation of pesticides may often provide an increase in the safety of pesticide handling, to the extent that the polymer wall of a microcapsule minimizes contact the handler with the active pesticide, particularly if the pesticide is in the form of a suspension of microcapsules. The provision of a comparatively quick release microencapsulated formulation of a pesticide could minimize contact of a handler with the active pesticide, yet provide the necessary release of the active ingredient when applied to protect plants from an insect pest which is already present or about to invade. Additionally, such encapsulated products containing pyrethroids could be useful in industrial, commercial or residential pest control.

European Patent Application number 0 823 993 discloses base-sensitive microcapsules which comprise a water-immiscible active ingredient within a shell wall, wherein said shell wall has free carboxylic acid groups incorporated therein (see p.2, lines 48-50). The microcapsules according to EP-A-0 823 993 differ from the ones of the present invention in that they do not contain ester moieties. United States Patent number 5,332,584 describes the preparation of microcapsules having a cross-linked amino resin shell wall which is formed from a water-immiscible etherified urea-formaldehyde prepolymer. However, microcapsules prepared by the process of that patent do not exhibit pH-sensitivity. In fact, that patent teaches that it is preferable to raise the pH of an aqueous microcapsule composition once the shell wall is formed by adding any water-soluble base (see column 10, lines 47-51). Accordingly, neither EP-A-0 823 993 nor US 5,332,584 teaches or suggests the present invention.

## SUMMARY OF THE INVENTION

This invention provides microcapsules which satisfy the above-mentioned objectives.

In one aspect, this invention comprises a microcapsule formed of an aminoplast shell wall and an encapsulated ingredient or ingredients enclosed within the wall, the wall produced by a microencapsulation process comprising reacting an amino resin prepolymer with a compound having one or more ester or thioester groups which are cleaved under basic conditions and two or more other functional groups capable of reacting with the resin.

Preferably this compound is a cross-linking agent produced by reaction of a multifunctional $C_1$-$C_{20}$ aliphatic or cycloaliphatic alcohol containing at least two, preferably at least 3, functional groups which are capable of esterification, such as pentaerythritol, dipentaerythritol, tripentaerythritol, trimethylolpropane, glycerol, mercaptoethanol, 3-mercaptopropane-diol, 1, 2, 4-butanetriol, 1, 3, 5-cyclohexanetriol, 1, 2, 3-heptanetriol, sorbitol, or 2,3-dimercapto-1-propanol with one or more 2-(hydroxy or thiol) substituted $C_2$-$C_6$ alkanoic acids. In another aspect, this invention comprises a process for the production of such microcapsules comprising reacting an amino resin prepolymer with a compound having one or more ester or thioester groups which are cleaved under basic conditions and two or more other functional groups capable of reacting with the resin.

Preferably this compound is a cross-linking agent produced by reaction of a multifunctional $C_1$-$C_{20}$ aliphatic or cycloalipharic alcohol containing at least two, preferably at least 3, functional groups which are capable of esterification, such as pentaerythritol, dipentaerythritol, tripentaerythritol, trimethylolpropane, glycerol, mercaptoethanol, 3-mercaptopropane-diol, 1,2,4-butanetriol, 1,3,5-cyclohexanetriol, 1,2,3-heptanetriol, sorbitol, or 2,3-dimercapto-1-propanol with a 2-(hydroxy or thiol) substituted $C_2$-$C_6$ alkanoic acid.

## DETAILED DESCRIPTION OF THE INVENTION

This invention relates to microcapsules containing an encapsulated substance which are cleaved in the presence of base; and can be designed so as to break down or disintegrate relatively quickly under basic conditions so as to release the encapsulated substance into the surrounding environment. The microcapsules are preferably stable under neutral or mildly acidic conditions.

The microcapsules are characterized by having an aminoplast shell wall produced by a microencapsulation process comprising reacting an amino resin prepolymer with a compound having one or more ester or thioester groups which are cleaved under basic conditions and two or more other functional groups capable of reacting with the resin.

Preferably this compound is a cross-linking agent produced by reaction of a multifunctional $C_1$-$C_{20}$ aliphatic or cycloaliphatic alcohol containing at least two, preferably at least 3, functional groups which are capable of esterification, such as pentaerythritol, dipentaerythritol, tripentaerythritol, trimethylolpropane, glycerol, mercaptoethanol, 3-mercaptopropane-diol, 1, 2, 4-butanetriol, 1, 3, 5-cyclohexanetriol, 1, 2, 3-hepanetriol, sorbitol, or 2,3-dimercapto-1-propanol with one or more 2-(hydroxy or thiol) substituted $C_2$-$C_6$ alkanoic acids. If the capsules are not in a basic environment, they function as typical diffusion controlled release microcapsules, permitting release of the encapsulated substance into the surrounding area in a controlled manner which is determined primarily by wall characteristics of the shells such as thickness, capsule size, permeability, etc. If, on the other hand, the capsules are placed in a basic environment, preferably in a situation in which the resulting pH is from about 8 to about 13, preferably from about 9 to about 11, the cross-linking moieties in the capsule wall are cleaved so as to "trigger" or initiate breakdown of the capsule wall. Depending on the conditions of the environment and on the particular structure of the capsule wall, the resulting breakdown may occur relatively quickly or relatively slowly. Comparatively quick breakdown enables comparatively quick (as opposed to controlled) release of the encapsulated substance into the surrounding environment. Capsule walls may be designed so as to produce comparatively quick or comparatively slow breakdown, for instance, by selection of the cross-linking agent and/or the amount used with relation to the amount of wall-forming resin.

The encapsulated material may be any type of material for which capsules of this type are suitable. Preferably the encapsulated material is comprised of a liquid; that is, it may be in the form of a liquid itself, or in the form of a solid which is suspended or dissolved in a liquid, or a mixture of liquids which are dissolved one in the other, or even a liquid emulsion. For purposes of this invention, the products will be described in terms of encapsulation of agricultural or non-agricultural pesticides. However, the invention is not so limited and, as mentioned above, may be used for encapsulation of many suitable materials for many purposes.

When the encapsulated material is a pesticide, again, it may be a single liquid pesticide, a solid pesticide dissolved or suspended in a liquid (in which case the liquid may be an inert material or may be a second pesticide which is in liquid form), or a mixture of liquids dissolved one in the other, or an emulsion. The encapsulated material may also contain other substances such as surfactants, dispersants and the like. If any of the materials, particularly the pesticide, is sensitive to ultraviolet light, the encapsulated liquid material may also contain a protectant, for example, a suspended solid ultraviolet light protectant such as titanium and/or zinc oxide as described in PCT application WO/RIA37824A. As used herein, "pesticides" is meant to include not only typical pesticides such as insecticides, herbicides, fungicides, acaricides, miticides, rodenticides and other materials which are toxic or poisonous to pests, but also chemicals having biological activity on pests such as plant and/or insect growth regulators.

The cross-linking agents have the general formula

$$\text{core}(A_1\text{-XH})_t(A_2\text{-XH})_u...(A_n\text{-XH})_y \qquad \textbf{(I)}$$

where "core" represents a structure derived from a multifunctional alcohol having at least two, and preferably at least three, functional groups capable of esterification (such as pentaerythritol, trimethylolpropane, glycerol, etc.); $A_1$-XH, $A_2$-XH, ...$A_n$-XH each constitute one or more randomly oligomerized esters of 2-(hydroxy or thiol) substituted $C_2$ - $C_6$ alkanoic acids and/or 2-thiol $C_2$ - $C_6$ substituted alkanoic acids, where XH represents the terminal alcohol or sulfhydryl capable of reacting with an amino-formaldehyde prepolymer; n is the number of functional groups on the core capable of reacting with derivatives of the 2-hydroxy and/or 2-thiol $C_2$ - C6 substituted alkanoic acids; and t+u+...y $\leq$ n.

Random oligomerization within groups $A_1$-XH, etc. occurs when a mixture of two or more such acids is reacted with the alcohol.

Preferred cross-linking agents are prepared from pentaerythritol or dipentaerythritol. When pentaerythritol is the reactant they have the general formula

$$C[CH_2OH]_a[CH_2O(COCHR\text{-}X)_m\text{-}H]_b[CH_2O(COCHR\text{-}X)_n\text{-}H]_c\,[CH_2O(COCHR\text{-}X)_p\text{-}H]_d$$

$$[CH_2O(COCHR\text{-}X)_q\text{-}H]_e \qquad \textbf{(II)}$$

where R is -H or $C_1$ - $C_4$ alkyl groups which may alternate randomly; X is oxygen or sulfur which may alternate randomly; a $\leq$ 2; and b, c, d, e are zero or a number from 1 to 4, where a+b+c+d+e=4; and m, n, p, and q are independent values from 1 to 20.

When dipentaerythritol is the reactant the cross-linking agents have the formula

$$[H\text{-}(X\text{-}CHR\text{-}CO)_{p'}OCH_2]_{d'}[H\text{-}(X\text{-}CHR\text{-}CO)_{n'}OCH_2]_{c'}[H\text{-}(X\text{-}CHR\text{-}}$$

$$CO)_{m'}OCH_2]_{b'}[HOCH_2]_{a'}C\text{-}CH_2OCH_2C[CH_2OH]_a[CH_2O(COCHR\text{-}X)_m\text{-}$$

$$H]_b[CH_2O(COCHR\text{-}X)_n\text{-}H]_c[CH_2O(COCHR\text{-}X)_p\text{-}H]_d$$

where R is -H or $C_1$ - $C_4$ alkyl groups which may alternate randomly; X is oxygen or sulfur which may alternate; a, a' $\leq$ 2; and b, b', c, c', d, and d' are zero or a number from 1 to 3 where a+b+c+d+a'+b'+c'+d'=6; and m, m', n, n', p, and p' are independent values from 1 to 20.

The cross-linking agents are esters which have one or more ester and/or thioester groups which are cleaved under basic environmental conditions as described below.

The ester-containing cross-linking agents of this invention may be prepared by known methods involving the condensation of carboxylic acids or carboxylic acid derivatives with alcohols such as pentaerythritol. To illustrate:

$$-COZ + HO \rightarrow CO\text{-}O\text{-} + HZ.$$

Typically Z may be a hydroxyl or methoxyl group when respectively water (Z = -OH) or methanol (Z = -$OCH_3$) would be eliminated. Yields are increased by removing the water or derivative moiety HZ as it is formed in the condensation reaction by such methods as azeotropic distillation, or by heating the mixture above the boiling point of HZ.

Suitable carboxylic acids include thioglycolic acid and glycolic acid. Suitable carboxylic acid derivatives include methyl 2-mercapto-acetate, and methyl glycolate may also be used. These compounds contain alcohol or thiol groups which are capable of reacting with the resin to form microcapsules. However it will be apparent to those skilled in the art that under their preparation conditions the alcohol or thiol groups may take part in self-condensation polymerization reactions with the carboxyl groups to form chains containing ester and thioester linkages:

$$-COZ + HS\text{-} \rightarrow -CO\text{-}S\text{-} + HZ$$

For example, reaction of pentaerythritol with thioglycolic acid and glycolic acid in the presence of a catalyst such as para-toluenesulfonic acid will produce a four-armed star structure illustrated by the formula:

$$C[CH_2OH]_a[CH_2O(COCH_2X)_m\text{-}H]_b[CH_2O(COCH_2X)_n\text{-}H]_c[CH_2O(COCH_2X)_p\text{-}H]_d$$

$$[CH_2O(COCH_2X)_q\text{-}H]_e$$

where X is O or S and may alternate randomly; a+b+c+d+e=4; and m, n, p, and q are independent values from 1 to 20. The length and composition of each arm may be variable and will reflect the process conditions and the mole ratios of the three reactants used in the preparation.

The sensitivity of thiols to oxidative coupling requires that reactions at elevated temperatures are kept air free, for example under a vacuum or under a nitrogen blanket.

In one process for the preparation of ester or thioester containing materials of this invention a mixture of pentaerythritol, thioglycolic acid and glycolic acid in toluene or xylene is azeotroped in the presence of a catalyst such as para-toluenesulfonic acid to remove the calculated quantity of water for the desired conversion.

In another process for the preparation of ester or thioester containing materials of this invention a mixture of pentaerythritol, thioglycolic acid and glycolic acid is heated under reflux at about 160°C in the presence of a catalyst such as para-toluenesulfonic acid. After a given time the reaction vessel is cooled to about 100°C and the reflux head is reconfigured for distillation to remove water. The choice of the distillation conditions must reflect a balance between (i) the possible loss of reagent such as thioglycolic acid, (ii) the stability of the product at the operating temperature and (iii) the potential for oxidative formation of disulfides on exposure to air.

It will be appreciated that the solubility in water or in organic solvents of pentaerythritol derivatives of the type mentioned above will depend upon the exact composition and on the chain lengths of the 'arm', i.e., on the values of m, n, p and q. For example structures which contain no thioglycolate (i.e., n and p = 0) and are of low Mw (e.g. m + q < 4) tend to be very soluble in water.

The crude reaction products may be fractionated as a function of their differential solubility in solvents such as ether, chloroform, toluene and water. In addition to fractionation, washing with water may be desirable to remove acid catalysts and any non-reacted reagents. Such purification is preferred if the ester containing materials are to be stored for extended periods before use in microcapsule preparations-

Preferred derivatives for use in this invention may be described by the compositions of the feedstocks or reactants employed in their preparations. Preferred derivatives of pentaerythritol include pentaerythritol diglycolate dimercaptoacetate (PDGDM), tetrathioglycolate (PTT), and monoglycolate trimercaptoacetate (PMGTM) and dipentaerythritol hexathiolactate (DPTA), octamercaptoacetate (DPMA) and diglycolate tetramercaptoacetate (DPDGTM). These are prepared from the following reactants:

| Mole Ratios in Feedstock | | | |
|---|---|---|---|
| Cross-Linker | Pentaerythritol | Glycolic Acid | Mercaptoacetic Acid |
| PDGDM | 1 | 2 | 2 |
| PTT | 1 | 0 | 4 |
| PMGTM | 1 | 1 | 3 |

| Mole Ratios in Feedstock | | | | |
|---|---|---|---|---|
| Cross-Linker | Dipentaerythritol | Thiolactic Acid | Glycolic Acid | Mercaptoacetic Acid |
| DPTA | 1 | 6 | 0 | 0 |
| DPMA | 1 | 0 | 0 | 8 |
| DPDGTM | 1 | 0 | 2 | 4 |

Preferred compositions for use in this invention are prepared from pentaerythritol, thioglycolic acid and glycolic acid in mole ratios of 1:2:2 (PDGDM), 1:4:0 (PTT), 1:3:1 (PMGTM) and from di-pentaerythritol and 2-thioglycolic acid in a mole ratio of 1:6 (DPTA).

Pentaerythritol derivatives such as pentaerythritol tetrakis (mercaptopropionate) (sold under the trademark Mercaptate Q-43 Ester) are known to be useful as wall modifying agents for urea-formaldehyde microcapsules, as disclosed, for instance, in U.S. Patents 4,956,129, 5,160,529 and 5,332,584. By reacting with ether or methylol groups in the prepolymer, these derivatives increase the degree of cross-linking, strengthening the wall at this time and decreasing its permeability. While not wishing to be bound by theory, we believe that the cross-linking agents of this invention have relatively weak links in the ester and/or thioester groups (-XCO-; where X = O or S) which are alpha to electron-withdrawing oxygen or sulfur atoms which cause the weak links to be susceptible to hydolysis in the presence of base.

The first step in the reaction between the cross-linker and an etherified amino formaldehyde prepolymer can

be represented as:

$$core[(A_1\text{-}X)_bH]_{t'}[(A_2\text{-}X)_uH]_{u'}...[(A_n\text{-}X)_yH]_{y'}$$

$$+ B >NCH_2OR_1$$

cross-linking agent functional group on an etherified amino formaldehyde prepolymer*

$$core[(A_1\text{-}X)_tCH_2N<]_{t'}[(A_2\text{-}X)_uCH_2N<]_{u'}...[(A_n\text{-}X)_yCH_2N<]_{y'}$$

$$+ B\ R_1OH$$

aminoplast microcapsule wall

where $R_1$ = H, or $C_1$ - $C_4$ alkyl; "core" is derived from a multifunctional alcohol having at least two, preferably at least three, functional groups capable of esterification (such as pentaerythritol, trimethylpropane, glycerol, etc.); $A_1$-XH, $A_2$-XH, ...$A_n$-XH each constitute one or more randomly oligomerized esters of 2-hydroxy $C_2$ - $C_6$ substituted alkanoic acids and/or 2-thiol $C_2$ - $C_6$ substituted alkanoic acids, where XH represents the terminal alcohol or sulfhydryl capable of reacting with an etherified amino formaldehyde prepolymer; n is the number of functional groups on the core capable of reacting with derivatives of the 2-hydroxy and/or 2-thiol $C_2$ - $C_6$ substituted alkanoic acids; $2 \leq B \leq t'+u'+...y'$; and $t'+u'+...y' \leq n$; and t,u...y are independent values from 1 to 20.

The symbol $>NCH_2O$ is used to indicate the aminoplast resin.

The cross-linking agents are utilized as one of the materials in the production of aminoplast, preferably urea-formaldehyde, microcapsules such that the walls of the resulting capsules contain the cross-linking agents. In the capsule walls the cross-linking agents ester moieties having the general formula

$$core[(A_1\text{-}X)_tCH_2N<]_{t'}[(A_2\text{-}X)_uCH_2N<]_{u'}...[(A_n\text{-}X)_yCH_2N<]_{y'}$$

$$+ B\ R_1OH \qquad \textbf{(IV)}$$

where "core", X, $R_1$, $A_1$, ... $A_n$, and $>NCH_2$- are as defined above.

In general the capsule wall will contain units variously having the formulas $A_{1,}(etc.)SCH_2N<$, $A_{1(etc.)}OCH_2H<$, and $A_{1(etc.)}<N$, the last-mentioned resulting from loss of formaldehyde from a group of the second type.

When pentherythritol is used as a reactant the moiety as present in the wall structure has the general formula

$$C[CH_2OH]_a[CH_2O(COCHR\text{-}X)_m\text{-} CH_2N<]_b[CH_2O(COCHR\text{-}X)_n\text{-} CH_2N<]_c$$

$$[CH_2(COCHR\text{-}X)_p\text{-}CH_2N<]_d[CH_2O(COCHR\text{-}X)_q\text{-}CH_2N<]_e \qquad \textbf{(V)}$$

where R is -H or $C_1$ - $C_4$ alkyl groups which may alternate randomly; X is oxygen or sulfur which may alternate randomly; $a \leq 2$, preferably 0; and b, c, d, e are zero or a number from 1 to 4, where a+b+c+d+e=4; $2 \leq B \leq b + c + d + e$; and m, n, p, and q are independent values from 1 to 20.

When dipentaerythritol is used as a reactant the moiety as present in the wall structure has the general formula

$$[>NCH_2\text{-}(X\text{-}CHR\text{-}CO)_p\text{'}OCH_2]_d\text{-}[>NCH_2\text{-}(X\text{-}CHR\text{-}CO)_n\text{'}OCH_2]_{c'}[>NCH_2\text{-}(X\text{-}CHR\text{-}$$

$$CO)_m\text{'}TOCH_2]_{b'}[HOCH_2]_{a'}C\text{-}CH_2OCH_2C[CH_2OH]_a[CH_2O(COCHR\text{-}X)_m\text{-}$$

$$CH_2N<]_b[CH_2O(COCHR\text{-}X)_n\text{-} CH_2N<]_c [CH_2O(COCHR\text{-}X)_p\text{-} CH_2N<]_d \qquad \textbf{(VI)}$$

where R is -H or $C_1$ - $C_4$ alkyl groups which may alternate randomly; X is oxygen or sulfur which may alternate randomly; a, a' < 2; and b, b', c, c', d, and d' are zero or a number from 1 to 3 where a+b+c+d+a'+b'+c'+d'=6; $2 \leq B \leq b + b' + c + c' + d + d'$; and m, m', n, n', p, and p' are independent values from 1 to 20.

*These functional groups are likely to be on different prepolymer molecules.

In general, ingredients for the products of this invention are chosen among those possible so as to exclude combinations which are reactive toward each other. Thus, the choice of the particular pentaerythritol derivative, prepolymer, material to be encapsulated, and other materials is made so as to minimize or prevent undesirable reactions.

The choice of cross-linking agents for use in this invention involves several considerations. For use in the microencapsulation process, the cross-linking agent must be compatible with the oil phase of the emulsion or dispersion which is utilized, as will be discussed below, to produce the microcapsules. In addition, the cross-linking agent must be able to survive the conditions of microcapsule wall formation (acidic conditions and preferred temperatures of approximately 20-80 °C as well as long-term storage at such temperatures and pH values of about 5.5 to about 7.5. As will be discussed below, when a comparatively quick release is desired, for instance quick release of the encapsulated contents in the gut of an insect, to be effective in triggering such release the cross-linking agent also must be rapidly hydrolyzed by a pH swing from $\pm\, 5.5 \pm$ to $\pm\, 9 \pm$.

The process for producing aminoplast or urea-formaldehyde microcapsules is described in U.S. Patents 4,596,129 and 5,160,529 and is generally as follows:

An organic solution or oil phase is provided which comprises the material to be encapsulated, an etherified amino resin prepolymer, preferably dissolved in the material to be encapsulated, and in which from about 50% to about 98% of the methylol groups of the prepolymer have been etherified with a $C_4$-$C_{10}$ alcohol, and the cross-linking agent, the latter preferably dissolved in the material to be encapsulated. Then, an emulsion of this organic solution or oil phase is created in a continuous phase aqueous solution comprising water and a surface-active agent, in which the emulsion comprises discrete droplets of the organic phase dispersed in the aqueous phase, such that there is formed an interface between the discrete droplets of the organic phase and the surrounding continuous phase aqueous material. Then, in situ condensation between the resin and cross-linker, and curing of the resulting polymer in the organic phase adjacent to the interface between the phases is produced by simultaneously heating the emulsion to a temperature of from about 20°C to about 100°C and adding to the emulsion an acidifying agent, and maintaining the emulsion at a pH of between about 0 and about 4 and a temperature of from about 20 to about 60°C for a sufficient period of time to allow substantial completion of in situ condensation of the resin prepolymer and cross-linker so as to convert the liquid droplets of the organic phase to capsules which consist of solid permeable polymer shells enclosing the encapsulated liquid material.

The organic phase or solution must be substantially insoluble in water. Preferably its solubility under ambient conditions is approximately 5,000 ppm by weight or less. The organic solution may consist of a single liquid material or one or more liquid active or solid materials dissolved in an inert solvent which at most has a slight solubility to water, or may consist of a suspension of solid materials in such an organic liquid.

A wide variety of liquids can be encapsulated by this process, and include chemical-biological agents including both pesticides and non-pesticidal materials suitable for use in agriculture and in pest control. These include herbicides, insecticides, fungicides, nematicides, bactericides, rodenticides, moluscicides, acaricides, larvaecides, pesticidal viruses and proteins, animal, insect and bird repellents, plant and insect growth regulators, fertilizers, pheromones, sex lures and attractants, and flavor and odor compositions. Included with the pesticide may be materials typically used in conjunction with it such as synergists and/or safeners.

One particularly useful type of pesticide in this invention is insecticides, particularly those known to be effective as stomach poisons. As will be discussed below, quick release microcapsules of this invention may be particularly useful for control of insects which have predominantly alkaline conditions in the gut.

The prepolymers useful in the present invention are those known from the above-mentioned U.S. patents; namely, partially etherified amino resin prepolymers with a high solubility in the organic phase and a low solubility in water. In the non-etherified form, the prepolymer contains a large number of methylol groups in its molecular structure. Etherified prepolymers have the hydroxyl hydrogen atoms replaced by alkyl groups and are obtained by condensation of a compound containing amino groups with formaldehyde and an alcohol. The prepolymers are soluble in the organic phase when the alkyl groups have four or more carbon atoms and in which more than about 50% of the hydroxyl hydrogen atoms on the prepolymer molecule have been replaced. Those useful in the above process are those in which from about 50% to about 98% of the hydroxyl hydrogen atoms have been replaced by alkyl groups, as some hydroxyl groups are needed for the eondensation/polymerization which occurs in the wall forming step. Preferably from about 70% to about 90% of the methylol groups have been etherified with preferably a $C_4$-$C_6$ alcohol. The alcohol may be straight or branched chain.

The amino resin may be one of four general types: urea-formaldehyde, melamine-formaldehyde, benzoguanamine-formaldehyde and glycoluril-formaldehyde. The first two mentioned are preferred, with urea-formaldehyde prepolymers being most preferred. The prepolymers utilized may be commercially available etherified amino resin prepolymers. Some commercially available etherified prepolymers are those sold by Cytec under the trademarks Beetle® and Cymel®, the Beckamine® line sold by Reichhold Chemicals, and the Resimen® line sold by Solutia.

The prepolymers can also be prepared by known techniques, for instance, by the reaction between the amine (preferably urea or melamine), formaldehyde and alcohol. The organic solution may also contain optional additives such as solvents and polymerization catalysts.

The amount of the prepolymer in the organic phase is not critical to the practice of this invention, but can vary over a wide range depending on the desired capsule wall strength and the desired quantity of core liquid in the finished capsule. It is most convenient, however, to use an organic phase of a prepolymer concentration of from about 1% to about 70% on a weight basis, preferably from about 5% to about 50%.

The organic phase also contains the cross-linking agent of the present invention, which is present in an amount of of from about 0.4 to about 7.5, preferably from about 0.7 to about 3, weight percent.

Once the organic phase has been formed, an emulsion is then prepared by dispersing the organic phase in an aqueous solution comprising water and a surface-active agent. The relative quantities of organic and aqueous phases are not critical to the practice of this invention, and can vary over a wide range, determined most by convenience and ease of handling. In practical usage, the organic phase will comprise a maximum of about 55% by volume of the total emulsion and will comprise discrete droplets of organic phase dispersed in the aqueous solution.

The shell wall, formed from the prepolymer and cross-linking agent, typically comprises about 1 to about 70 percent by weight of the microcapsule, preferably about 5 to about 50 percent by weight of the microcapsule. Typically, the ester moiety comprises from about 5 to about 80 percent by weight of the shell wall.

The surface active agent can be any of the wide variety of compounds known to be useful for lowering the surface tension of a fluid interface, including both nonionic and anionic surface active agents. The quantity of surface active agent is not critical but for convenience generally comprises from about 0.1% to about 5% by weight of the aqueous phase.

In some systems emulsion stability can be enhanced by adding a protective colloid to the aqueous phase. The protective colloid stabilizes a dispersed system against aggregation, flocculation and coalescense. Many materials are known to function as protective colloids and are available commercially. The colloid may be added to the aqueous phase prior to the formation of the emulsion or after the emulsion has been formed. Preferred protective colloids are lignin sulfonates or naphthalene-formaldehyde sulfonates. The exact quantity of the colloid is not critical; most conveniently between about 0.1% and about 5.0% colloid by weight in terms of the aqueous phase is utilized.

The droplet size of the emulsion is also not critical to the invention. For greatest utility, the droplet size will be in the range of from about 0.5 to about 4,000 microns in diameter, preferably from about 1 micron to about 100 microns in diameter, most preferably from about 1 to about 25 microns in diameter. The emulsion is prepared as is usual, employing any conventional high shear stirrer. Once the desired droplet size is obtained, mild agitation is generally sufficient to prevent proper growth throughout the balance of the process.

Once the desired droplet size has been attained, the overall system is then acidified to a pH of between about 0 and about 4.0, preferably between about 1.0 and about 3.0. This causes the prepolymer and cross-linker to polymerize by condensation in situ and form a shell completely enclosing each droplet. Acidification can be accomplished by any suitable means including any water-soluble acid such as formic, citric, hydrochloric, sulfuric, or phosphoric acid, and the like. Acidification can also be achieved by the use of acidic dispersants or surface-active agents, provided that they are added to the system after the emulsion has been formed.

As the polymer wall becomes more rigid, contact between the active groups on the prepolymer becomes more difficult. Thus, the in situ condensation polymerization reaction is self terminating and is generally allowed to run to completion. However, if desired, the reaction can be arrested before completion by raising the pH. In this manner, the wall tightness, rigidity and permeability can be controlled.

The rate of the in-situ condensation polymerization increases with both acidity and temperature depending on the pH. The reaction can therefore be conducted anywhere within the range or from about 20°C to about 100°C, preferably between 40°C and about 60°C. The reaction will generally be complete within a few hours, although with high acidity and high temperature it can be completed within minutes.

The resulting product is an aqueous suspension of the microcapsules in which the material in the organic phase is contained within the microcapsules. The aqueous phase of the suspension contains those adjuvants and other materials which were present in the aqueous phase of the emulsion.

The foregoing is a description of production of microcapsules according to the invention in which the capsules are produced from an oil-in-water emulsion and the encapsulated material comprises an organic liquid. This is the preferred type of product, and process, for the capsules of this invention. However, capsules of this invention may also be produced which contain an aqueous liquid, which may include pesticides and the like similarly dispersed, suspended or dissolved therein.

Such products may be produced using an encapsulation process in which microcapsules are produced from a water-in-oil emulsion and which the aqueous phase contains a non-etherified amino resin prepolymer and a water-soluble cross-linking agent of the type described herein. The emulsion is formed under conditions which do not favor reaction between the prepolymer and cross-linking agent, then conditions are changed so that they react and form a membrane around the water droplets. The resulting product is an oil suspension of such microcapsules. Optionally, the aqueous suspension of microcapsules further comprises a phase transfer catalyst.

The microcapsule suspensions thus produced may be utilized in the normal fashion of such products, i.e., by packaging the suspension and ultimately transferring the suspension into a spray tank or other spray equipment, in which it is mixed with water to form a sprayable suspension. Alternatively, the suspension of microcapsules may be converted into a dry microcapsule product by spray drying or other known techniques and the resulting material packaged in dry form.

To take advantage of the base-sensitivity of the microcapsules due to the presence of the cross-linking agent, for use the capsules are placed in a basic environment, directly or indirectly. Direct methods can be accomplished by adding a basic substance to the spray tank or spray equipment containing the microcapsules and water so that release of the encapsulated material can begin in the spray tank. Thus, in one aspect of the invention, a suspension of microcapsules is provided which further comprises a basic substance sufficient to cause cleavage of the ester moiety. In another convenient aspect of the invention, the miorocapsules (either in suspension or dry form) are packaged with, but separately from, a suitable basic substance in any of a number of forms generally known as "twin packs" so that the basic substance is conveniently on hand, in an appropriate amount, for use in this way.

The basic substance may be any of a number of bases or basic substances and is utilized in an amount so as to provide a resulting pH in the presence of the base-sensitive microcapsules of from about 8 to about 13, preferably from about 9 to about 11. Preferred bases are alkali and alkaline earth metal hydroxides, hydroxides of quaternary ammonium salts such as ammonium and trialkyl ammonium hydroxides, and amines such as triethylamine.

Exposure of the capsules to a basic environment causes breakdown of the capsule wall by hydrolysis of the ester moieties introduced by use of the cross-linking agent. The rapidity of the breakdown may be varied depending on the choice of the identity and amount of cross-linking agent, the overall cansule wall content and construction, and the pH of the environment into which the capsule is put. Exposure of the capsules to that basic environment "triggers" degradation of the wall with a resulting change in the release profile of the capsule from that which-would exist in an environment having a non-basic pH value. Depending on the above factors, the release rate may be changed dramatically, resulting in a relatively quick release of the encapsulated materials, or may be changed to a much lower extent, resulting in some, but not a dramatic, increase in release rate.

The base may be introduced so as to either directly or indirectly provide an environment in which the pH is from about 8 to about 13, preferably from about 9 to about 11 (in the presence of the capsules). In the direct method, the base is added in an amount so as to provide an environment within the aforesaid pH range at or close to the time of its addition, e.g. in the spray tank. However, after spraying such a product, the pH of the sprayed droplets will naturally increase due to an increased concentration of base as the water evaporates. Accordingly, in an indirect method the amount of base utilized in this invention may be less than that which will provide an immediate or near-immediate pH of the target value, but which is sufficient to provide such a pH after spraying as the sprayed water evaporates. For instance, establishment of a pH in the spray tank as low as about 7.5-9 would result in the pH of the environment (e. g., water droplet on plant surfaces) increasing to a value of from about 9 to about 11 as the water evaporates. Thus, the concept of this invention includes initially contacting the microcapsules with a basic substance in a spray tank or similar apparatus such that the initial environment is at a pH value of as low as about 7.5, then spraying or otherwise applying the resulting dispersion to foliage or other surfaces. In such an application the pH will increase as water evaporates to a preferred value of from about 9 to about 11.

Alternatively, the microcapsules may be sprayed without utilizing a base, in which case they would function as controlled release capsules, releasing the contained ingredient into the surrounding environment.

Biological effects of the encapsulated products can be enhanced by using a humectant such as polyethylene glycol or glycerol to improve hydrolysis of the ester moieties in the capsule walls when situated on foliar surfaces.

One of the advantages of the microcapsules of this invention is that they provide the possibility of producing a comparatively safer pesticidal product as compared to standard liquid or solid products but which still can provide quick release and thus ready availability of the encapsulated material for pest control.

For example, pyrethroid insecticides are known in some cases to provoke an adverse skin reaction. This reaction has been described as a burning, tingling, numbing or prickling sensation, which is most pronounced on regions of the handler's face. This reaction, known as paraesthesia, is generally associated with transfer of trace amounts of the pyrethroid to the handler's face through inadvertent touching by a contaminated hand. In current agricultural practices, compositions containing pyrethroids for application to plant foliage are provided in nonencapsulated forms, such as emulsifiable concentrates, wettable powders and dusts.

Microencapsulation of the pesticides utilizing the current invention may provide an increase in the safety of pesticide handling to the extent that the polymer wall of the microcapsule minimizes contact of the handler with the active pesticide. At the same time, the comparatively quick release properties which the compositions of this invention can be designed to possess enable the provision of the active ingredient into the environment in relatively the same concentration and with relatively the same effect as a typical nonencapsulated composition. This avoids typical drawbacks of slow release microcapsules which are not satisfactory when a relatively complete and quick release of the encapsulated ingredient is needed.

The invention may be used to produce capsule suspensions containing two materials which may be incompatible with each other, with one material being encapsulated and the other contained in the aqueous phase. Such combination products are storage-stable but produce a combination pesticidal product in the spray tank when a basic substance is added, so that both pesticides may be applied together.

The capsules of this invention have particular utility in control of insects which have an alkaline environment in their gut, particularly larvae of certain lepidoptera such as *Heliothis spp.* (i.e. Tobacco budworm), *Helicoverpa spp.* (i.e. Cotton bollworm), *Spodoptera spp.* (i.e. Beet, Fall, and Southern armyworms), *Agrotis ipsilon* (Black cutworm), *Pseudoplusia includens* (Soybean looper), *Trichoplusia ni* (Cabbage looper), *Bucculatrix thurberiella* (Cotton leafperforator), *Alabama argillacea* (Cotton leafworm), *Estigmene acraea* (Saltmarsh caterpillar), *Pectinophora gossypiella* (Pink bollworm), and *Ostrinia nubialis* (European comborer). To be efficacious for this purpose, the capsules of this invention must include a cross-linking agent which on contact with a base at a pH of about 8-10 will cause complete or near complete release of the encapsulated insecticidal contents within four hours or less, the period of time in which the capsule is likely to remain within the insect's gut. Capsules of this type are sprayed or deposited without the accompanying basic substance, and function as controlled release microcapsules until consumed by the insect. These capsules are particularly useful in that they are not harmful to beneficial insects which do not have an alkaline environment gut or do not feed on plants. The insecticide chlorpyrifos has been found particularly useful for such purpose.

It has been found that release of the encapsulated ingredients via basic hydrolysis of ester moieties in the capsule wall may be speeded up or enhanced by the use of a phase transfer catalyst such as a quaternary onium salt.

It should be noted that the ester moieties in the capsule walls may also be subject to hydrolysis in the presence of an acid environment, particularly an environment of pH about 1 to about 4. Thus triggering of release of the encapsulated ingredients may also be performed by placing these capsules in an environment of that nature.

The invention is further illustrated by the following examples:

### Example 1: Preparation of cross-linkers

The following general procedure was used as an azeotrope method for preparing pentaerythritol derivatives of this invention. Note that the sensitivity of thiols to oxidative coupling requires that reactions at elevated temperatures are kept air free.

A solution of pentaerythritol, thioglycolic acid, glycolic acid and p-toluenesulfonic acid in toluene was purged with nitrogen. The solution was then azeotroped under a nitrogen blanket in a Dean and Stark distillation apparatus when a dense lower organic layer separated. The progress of the reaction was monitored by infra-red spectroscopy by the disappearance of the acid signal at ca 1700 cm$^{-1}$ and the appearance of ester signal at about 1735 cm$^{-1}$. The spectral data correlated with the amount of azeotroped water. When the desired conversion was complete the reactor was cooled to room temperature under nitrogen. Typical reaction times for an oil bath temperature of 155°C were four hours.

In one illustration preparation the upper toluene layer was decanted and the solvent was evaporated to give a toluene soluble fraction (2%). The lower organic phase was dissolved in chloroform which was washed with water. The aqueous and chloroform phases were separated and each was evaporated to dryness to give respectively a chloroform soluble fraction (57%) and a water soluble fraction (41%).

Recipes for various materials prepared by the above process are given in Table 1.

## Table 1: Recipes and Summary Data for SH and/or OH Aliphatic Ester Derivatives

| Ex. | Alcohol | | | Acid | | | Ratio | Catalyst | | | Solvent | | Time | Yield | |
|---|---|---|---|---|---|---|---|---|---|---|---|---|---|---|---|
| | type | wt,g | mmol | type | wt,g | mmol | acid:alc | type | wt,mg | mmol | type | ml | (hr) | wt,g | % |
| **Mercapto-Acid Esters** | | | | | | | | | | | | | | | |
| 1A | P | 13.62 | 100 | MA | 38.69 | 420.0 | 4.20 | pTsOH | 78 | 0.40 | tol | 50 | 16 | 44.35 | 89 |
| 1B | DP | 6.36 | 25 | MA | 18.43 | 200 | 8.0 | pTsOH | 76 | 0.40 | tol | 75 | 48 | 16.62 | 82 |
| 1C | DP | 3.8 | 15 | 2MPA | 9.7 | 91.4 | 6.09 | pTsOH | 50 | 0.26 | xyl | 40 | | 12 | 95 |
| **Glycolate Esters. Acids** | | | | | | | | | | | | | | | |
| 1D | TMP | 4.47 | 33 | GA | 8.87 | 117 | 3.5 | pTsOH | 19 | 0.10 | tol | 50 | 13 | 9.62 | 94 |
| 1E | ME | 23.44 | 300 | GA | 22.82 | 300 | 1.0 | pTsOH | 57 | 0.3 | tol | 100 | 24 | 35.44 | 87 |
| 1F | 3MPD | 11.39 | 100 | GA | 15.36 | 200 | 2.0 | pTsOH | 38 | 0.20 | tol | 50 | 21 | 22.42 | 100 |
| **Mixed Glycolic Acid and Mercapto-Acid Esters** | | | | | | | | | | | | | | | |
| 1G | GLY | 5.32 | 20 | GA/MA seq | 6.08 | 66 | 3.3 | pTsOH | 43 | 0.22 | tol | 40 | 40 | 8.33 | 77 |
| 1H | P | 13.62 | 100 | GA/MA 1:1.1 | 35.48 | 440 | 4.4 | pTsOH | 76 | 0.4 | tol | 50 | 4 | 40.25 | 99 |
| 1J | P | 13.62 | 100 | GA/MA 1:3 | 41.26 | 400 | 4.0 | pTsOH | 76 | 0.40 | tol | 75 | 24 | 41.52 | 100 |
| 1K | P | 13.62 | 100 | GA/2MPA 1/1 | 38.71 | 420 | 4.2 | pTsOH | 27 | 0.14 | tol | 50 | 19 | 45.43 | 100 |
| 1L | DP | 6.36 | 25 | GA/MA 1:2 | 13.01 | 150 | 6.0 | pTsOH | 29 | 0.15 | tol | 50 | 48 | 16.67 | 100 |
| 1M | DP | 6.36 | 25 | GA/MA 1:1 | 12.61 | 150 | 6.0 | pTsOH | 29 | 0.15 | tol | 50 | 48 | 12.59 | 77 |
| **Mixed Lactic Acid or Lactide and Mercapto-Acid Esters** | | | | | | | | | | | | | | | |
| 1N | P | 13.62 | 100 | LA/MA 1:1 | 39.62 | 400 | 4.0 | pTsOH | 76 | 0.40 | tol | 50 | | | |
| 1O | P | 10.61 | 78 | Lt/2MPA 1:2 | | 288 | 3.7 | pTsOH | | | tol | 50 | 13 | 36.61 | |

## Table 2: Mixed Glycolic Acid and Mercapto-Acid Esters - Solvent Free Preparations

| Ex. | Alcohol | | | Acids | | | pTsOH | | Time hr | | Total Yield | | Solvent Fraction (%) | | | |
|-----|------|------|------|------|-------|------|-----|------|--------|-------|------|-----|------|-------|---------|--------|
| | type | wt,g | mmol | type | wt,g | mmol | mg | mmol | reflux | distln | wt,g | % | CHCl3 | water | toluene | insols |
| 1P | P | 13.62 | 100 | GA | 15.21 | 200 | 70 | 0.37 | 5 | 20 | 41.0 | 102 | 96 | 4 | - | - |
| | | | | MA | 20.26 | 200 | | | | | | | | | | |
| 1Q | P | 8.20 | - | MA | 3.00 | 32 | 10 | 0.05 | 4 | 4vac | 9.0 | - | | | - | - |
| 1R | P | 20.43 | 150 | GA | 22.81 | 300 | 100 | 0.92 | 2 | 3vac | 61.8 | 103 | 67 | 33 | - | - |
| | | | | MA | 30.26 | 330 | | | | | | | | | | |
| 1S | P | 13.62 | 100 | GA | 15.21 | 200 | 76 | 0.40 | 4 | 4vac | 36.8 | 92 | 83.1 | 16.9 | - | - |
| | | | | MA | 20.27 | 220 | | | | | | | | | | |

**Alcohols:**

DP = Dipentaerythritol          MA = mercaptoacetic acid          P = pentaerythritol

GLY = Glycerol          2MPA = 2-mercaptopropionicacid          TMP = trimethylolpropane

3MPD = 3-mercaptopropanediol          GA = glycolic acid          ME = mercaptoethanol

3MPD = 3-mercaptopropanediol          LA = lactic acid          Lt = lactide (cyclic dimer of lactic acid)

## Preparation of Cross-linkers By a Solvent Free Method

A mixture of pentaerythritol, glycolic acid, thioglycolic acid and paratoluenesulphonic acid as catalyst was stirred under a nitrogen purge for thirty minutes. The mixture was heated in an oil bath at 160°C to reflux and under a nitrogen blanket for 2 hours to effect initial oligomerization. These conditions reduced the amount of monomeric thioglycolic (bp 96°C/5mm Hg) and glycolic (mp 75-80°C) acids and of pentaerythritol (bp 276°C/30mm Hg) which might otherwise be lost in the subsequent distillation.

The reaction vessel was then cooled under nitrogen to about 100°C and the reflux arrangement was reconfigured for distillation. Typically the mixture was then heated at about 100°C under a water pump vacuum (ca 15 mm Hg) for 2 hours followed by high vacuum (ca I mm Hg) for 2 hours. Summary data for solvent free processes are collected in Table II The method afforded relatively high yields of poorly water soluble products.

## Examples 2-17: Preparation of Microcapsules

A suspension of microcapsules containing as a pesticide either the insecticides chlorpyrifos or lambda-cyhalothrin or the herbicide butylate was prepared utilizing the Zeneca microencapsulation process wherein the pesticide was encapsulated within the polymeric shell wall formed by interfacial polymerization and condensation of a mixture of a butylated urea-formaldehyde prepolymer and a cross-linking agent containing sulfhydryl (-SH) and/or hydroxyl (-OH) groups.

The general procedure was as follows: the organic phase was comprised of the pesticide and, in some cases, dissolved in a solvent, a butylated urea-formaldehyde prepolymer and a cross-linking agent. The aqueous phase was comprised of a protective colloid, an emulsifier, and an acid dissolved in water. An emulsion is then prepared by dispersing the oil phase in the aqueous phase employing any conventional high shear stirrer until the desired particle size is achieved. The resulting oil in water emulsion is then heated to 50°C + 5°C for three hours. The resulting capsule suspension was removed from the heat and post-formulated with suspending agents, ammonium hydroxide, and a biocide using a convention high shear stirrer.

A composition was prepared according to the foregoing procedure including ingredients as listed below:

### Example 2

|  | Weight (g) |
|---|---|
| chlorpyrifos (technical grade) | 13.64 |
| Aromatic 200solvent | 7.30 |
| Beetle 80 (etherified urea-formaldehyde resin available from Cytec) | 1.38 |
| PDGDM | 0.35 |
| Reax 85A (protective colloid) (20% solution) | 2.598 |
| Petro BAF (surfactant) | 0.018 |
| Sulfuric acid (50% solution) | 0.16 |
| Water | 14.921 |
| Xanthan gum (Kelzan product, available from Monsanto) | 0.030 |
| Attagel 40 (attapulfite clay, available from Engelhard) | 0.301 |
| Ammonium Hydroxide (30% solution) | 0.12 |
| Proxel GXL biocide (available from ICI) | 0.10 |
| Median Particle Size | 10.0μ |

### Examples 3-4

Compositions were prepared according to the foregoing procedure including ingredients as listed below:

| Example | 3<br>Weight (g) | 4<br>Weight (g) |
|---|---|---|
| chlorpyrifos (technical grade) | 17.78 | 17.78 |
| Aromatic 200 | 9.56 | 9.56 |
| Beetle 80 Resin | 3.86 | 4.34 |
| PDGDM | 1.00 | 0.48 |
| Reax 83A | 0.82 | 0.82 |
| Petro BAF | 0.027 | 0.027 |
| Sulfuric acid (50% solution) | 0.32 | 0.28 |
| Water | 26.25 | 26.25 |
| Kelzan | 0.060 | 0.060 |
| Attagel 40 | 0.60 | 0.60 |
| Ammonium Hydroxide (30% solution) | 0.14 | 0.13 |
| Proxel GXL | 0.10 | 0.10 |
| Median Particle Size | 8.9µ | 9.4µ |

**Examples 5-6**

Compositions were prepared according to the foregoing procedure including ingredients as listed below:

| Example | 5<br>Weight<br>(g) | 6<br>Weight<br>(g) |
|---|---|---|
| chlorpyrifos technical | 17.71 | 17.78 |
| Aromatic 200 | 9.54 | 9.57 |
| Beetle 80 Resin | 3.84 | 3.86 |
| PDGDM | --- | 0.53 |
| PTT | 0.95 | 0.53 |
| Reax 83A | 0.826 | 0.82 |
| Petro BAF | 0.028 | 0.027 |
| Sulfuric acid (50% solution) | 0.25 | 0.28 |
| Water | 26.11 | 26.25 |
| Kelzan | 0.062 | 0.06 |
| Attagel 40 | 0.600 | 0.60 |
| Ammonium Hydroxide (30% solution) | 0.12 | 0.13 |
| Proxel GXL | 0.10 | 0.10 |
| Median Particle Size | 9.2µ | 10.5µ |

**Examples 7-8**

Compositions were prepared according to the foregoing procedure including ingredients as listed below:

| Example | 7<br>Weight<br>(g) | 8<br>Weight<br>(g) |
|---|---|---|
| Lambda-cyhalothrin<br>(55% solution in Aromatic 200) | 14.25 | 15.09 |
| Beetle 80 Resin | 2.01 | 0.99 |
| PDGDM | 0.51 | 0.67 |
| Reax 85A (20% solution) | 3.633 | 3.604 |
| Petro BAF | 0.050 | 0.050 |

(continued)

| Example | 7 Weight (g) | 8 Weight (g) |
|---|---|---|
| Sulfuric Acid (50% solution) | 0.24 | 0.23 |
| Water | 20.020 | 20.045 |
| Kelzan | 0.030 | 0.031 |
| Attagel 40 | 0.301 | 0.302 |
| Proxel GXL | 0.11 | 0.11 |
| Sodium Hydroxide (25% solution) | 0.06 | 0.05 |
| Median Particle Size | 5.8µ | 5.9µ |

**Examples 9-10**

Compositions were prepared according to the foregoing procedure including ingredients as listed below:

| Example | 9 Weight (g) | 10 Weight (g) |
|---|---|---|
| Lambda-cyhalothrin (55% solution in Aromatic 200) | 18.00 | 18.02 |
| Beetle 80 Resin | 1.16 | 1.21 |
| PTT | 0.29 | 0.81 |
| Reax 100M (40% solution) (protective colloid) | 1.478 | 1.504 |
| Petro BAF | 0.051 | 0.053 |
| Sulfuric Acid (50% solution) | 0.20 | 0.18 |
| Water | 18.128 | 18.217 |
| Kelzan | 0.031 | 0.032 |
| Attagel 40 | 0.307 | 0.303 |
| Proxel GXL | 0.11 | 0.11 |
| Sodium Hydroxide (25% solution) | 0.10 | 0.22 |
| Median Particle Size | 5.0µ | 5.2µ |

**Examples 11-12**

Compositions were prepared according to the foregoing procedure including ingredients as listed below:

| Example | 11 Weight (g) | 12 Weight (g) |
|---|---|---|
| Butylate (technical grade) | 39.20 | 39.20 |
| Beetle 80 Resin | 2.10 | 2.08 |
| DPTA | 0.90 | ---- |
| DPMA | ---- | 0.90 |
| Reax 100M (40% solution) | 1.90 | 1.90 |
| Petro BAF | 0.081 | 0.080 |
| Sulfuric Acid (50% solution) | 0.26 | 0.23 |
| Water | 34.96 | 35.22 |
| Sodium Hydroxide (25% solution) | 0.16 | 0.16 |
| Median Particle Size | 12.0µ | 8.6µ |

**Examples 13-14**

Compositions were prepared according to the foregoing procedure including ingredients as listed below:

| Example | 13 Weight (g) | 14 Weight (g) |
|---|---|---|
| Butylate (technical grade) | 15.52 | 15.51 |
| Beetle 80 Resin | 0.75 | 1.03 |
| PMGTM | 0.50 | ---- |
| DPDGTM | ---- | 0.26 |
| Reax 85A (20% solution) | 3.230 | 3.330 |
| Petro BAF | 0.053 | 0.052 |
| Sulfuric Acid (50% solution) | 0.21 | 0.21 |
| Water | 20.030 | 20.007 |
| Sodium Hydroxide (25% solution) | 0.13 | 0.14 |
| Median Particle Size | 5.6μ | 5.6μ |

**Examples 15-17**

Compositions were prepared according to the foregoing procedure including ingredients as listed below:

| Example | 15 Weight (g) | 16 Weight (g) | 17 Weight (g) |
|---|---|---|---|
| Butylate (technical grade) | 15.49 | 15.51 | 15.50 |
| Beetle 80 Resin | 1.02 | 1.00 | 1.00 |
| Q43 | 0.25 | ---- | ---- |
| PTT | ---- | 0.25 | ---- |
| PDGDM | ---- | ---- | 0.25 |
| Reax 85A (20% solution) | 3.364 | 3.256 | 3.339 |
| Petro BAF | 0.050 | 0.051 | 0.05 |
| Sulfuric Acid (50% solution) | 0.23 | 0.29 | 0.22 |
| Water | 20.409 | 20.199 | 20.269 |
| Sodium Hydroxide (25% solution) | 0.10 | 0.16 | 0.20 |
| Median Particle Size | 6.4μ | 5.8μ | 11.0μ |

**Example 18 - Biological Evaluation**

The compositions of Examples 2-6 were tested for biological activity against two species, *Lygus hesperus* (a sucking insect) and *Heliothis virescens* (a foliar feeding lepidoptera with an alkaline gut).

**Test 1**

A. Contact/Residue Contact (Species: *Lygus hesperus*)

The test procedure was as follows:

*Lygus hesperius* was the subject in this test. Adult bugs in cages were sprayed at 250 l/h. There were four replicates of 10 insects for 5 rates of each formulation. Mortality assessments were made at 1,2,3,4,5, and 6 DAT.

The LC50s in ppm are given in Table 3:

Table 3

| Formulation | 1DAT | 2DAT | 3DAT | 4DAT | 5DAT | 6DAT |
|---|---|---|---|---|---|---|
| Chlorpyrifos technical | 313 | 310 | 311 | 313 | 313 | 325 |
| Example 2 | 760 | 544 | 424 | 367 | 327 | 294 |

B. Foliar Persistence (Species: *Heliothis virescens*)

The test procedure was as follows:

*Helicoverpa zea* was the subject of this test. Detached cotton leaves were sprayed at 250 l/h. Neonate larvae were infested on disks of treated leaves. There were three replicates of 18 insects for 3 rates of each formulation. Mortality assessments were made at 1,2, and 3 DAT.

The LC50s in ppm are given in Table 4:

Table 4

| Formulation | 1DAT | 2DAT | 3DAT | Total |
|---|---|---|---|---|
| Chlorpyrifos technical | 9.8 | 8.6 | 12.2 | 10.2 |
| Example 2 | 10.3 | 7.2 | 7.3 | 8.4 |

**Test 2**

A. Contact/Residue Contact (Species: *Lygus hesperus*)

Procedures were as follows:

Cardboard cages containing a fresh green bean were infested with 10 adult *Lygus hesperus* bugs. Four replicates per rate were sprayed at 250 liters/hectare. Materials were dissolved in 0.05% X-77 in water. Previous test results produced an LC50 of ~300ppm for technical chlorpyrifos, so rates of 900, 600, 400, 267, and 178 ppm were chosen for

Lorsban 4E. Results for CS formulations have frequently produced LC50s much higher at the start of the test, so rates of 2700, 1800. 1200, 800, 533 ppm were chosen for them. The Contact/Residue Contact procedure for *L. hesperus* was followed (as in Test 1 above), with mortality assessments made daily for four days.
The LC50s in ppm are as follows:

| Formulation | 1DAT | 2DAT | 3DAT | 4DAT |
|---|---|---|---|---|
| Lorsban EC | 239 | 220 | 214 | 205 |
| Example 3 | >2700 | 1203 | 909 | 679 |
| Example 4 | >2700 | 922 | 732 | 543 |
| Example 6 | >2700 | 2515 | 1846 | 1479 |
| UTC | 3% | 3% | 3% | 10% |
| >2700 indicates ≤ 5% mortality at the highest rate | | | | |
| UTC - untreated control | | | | |

B. Foliar Persistence (Species: *Heliothis virescens*)

Test procedures were as follows:

Cotton plants were sprayed at 250 liters/hectare. Previous tests produced LC50s of ~30ppm and LC90s of ~90ppm for Lorsban 4E against *Heliothis*, so rates of 100, 50, 25, and 12.5 ppm were chosen for all formulations. Plants were treated on three consecutive days, four rates per formulation, with the first two days' treatments kept in the glasshouse. On the third day, after the final treatment, treated leaves were detached for infestation. Three replicates of 15 insects per replicate were infested. Mortality assessments were made 2 days after infesting.

The LC50s in ppm are as follows:

| Formulation | 0DAT | 1DAT | 2DAT |
|---|---|---|---|
| Lorsban 4E | 74 | >>100 | >>100 |
| Example 3 | 146 | 102 | 46 |
| Example 4 | 203 | 58 | 70 |
| Example 5 | 167 | 498* | 149 |
| UTC | 2% | | |

\* Data point anomaly due to lack of control at one rate

**Test 3**

A. Contact/Residue Contact (Species: *Lygus hesperus*)

The test procedure was as in Test 2.
The LC50s in ppm are as follows:

| Formulation | 1DAT | 2DAT | 3DAT | 4DAT | 5DAT | 6DAT |
|---|---|---|---|---|---|---|
| Lorsban 4E | 262 | 253 | 252 | 258 | 260 | 257 |
| Example 5 | ---- | 4558 | 2510 | 2134 | 1979 | 1939 |
| Example 6 | ---- | ---- | 1995 | 1839 | 1757 | 1711 |
| UTC | 5% | 5% | 5% | 10% | 15% | 18% |

---- indicates no LC50 predicted due to insufficient data

B. Foliar Persistence (Species: *Heliothis virescens*)

The test procedure was as in Test 2.
The LC50s in ppm are as follows:

| Formulation | 0DAT | 2DAT |
|---|---|---|
| Lorsban 4E | 104 | ---- |
| Example 5 | 164 | 177 |
| Example 6 | 81 | 81 |
| UTC | 2% | 2% |

---- indicates no LC50 predicted due to insufficient data

**Claims**

1.  A microcapsule formed of an aminoplast shell wall and an encapsulated ingredient or ingredients enclosed within the wall, the wall containing an ester moiety having the formula:

$$\text{core } [(A_1\text{-}X)_t CH_2 N{<}]_{t'} [(A_2\text{-}X)_u CH_2 N{<}]_{u'}....[(A_n\text{-}X)_y CH_2 N{<}]_{y'} \qquad (IV)$$

where "core" is derived from a multifunctional $C_1\text{-}C_{20}$ aliphatic or cycloaliphatic alcohol containing at least two functional groups capable of esterification; $(A_1\text{-}X)_t$, $(A_2\text{-}X)_u$,... $(A_n\text{-}X)_y$ each constitute one or more randomly oligomerized esters of 2-hydroxy substituted $C_2$ - $C_6$ alkanoic acids and/or 2-thiol $C_2$- $C_6$ substituted alkanoic acids, where X represents oxygen or sulfur; $-CH_2N{<}$ represents a trivalent nitrogen fragment of the amino formaldehyde prepolymer; and n is the number of functional groups on the core capable of reacting with derivatives of the 2-hydroxy and/or 2-thiol $C_2$- $C_6$ substituted alkanoic acids; t, u ...y are independent values from 1-20; and $2 \le t' + u'.....$

+ y' ≤ n.

2.   A microcapsule according to claim 1 in which the alcohol has at least three functional groups capable of esterification.

3.   A microcapsule according to claim 1 in which the wall containing an ester moiety has the formula

$$C[CH_2OH]_a[CH_2O(COCHR\text{-}X)_m\text{- }CH_2N<]_b[CH_2O(COCHR\text{-}X)_n\text{- }CH_2N<]_c$$

$$[CH_2O(COCHR\text{-}X)_p\text{- }CH_2N<]_d\ [CH_2O(COCHR\text{-}X)_q\text{- }CH_2N<]_e \quad\quad (V)$$

where R is -H or $C_1$ - $C_4$ alkyl groups which may alternate randomly; X is oxygen or sulfur which may alternate randomly; a ≤ 2; and b, c, d, e are zero or a number from 1 to 4, where a+b+c+d+e=4; and m, n, p, and q are independent values from 1 to 20.
or

$$[>NCH_2\text{-}(X\text{-}CHR\text{-}CO)_p,OCH_2]_{d'}[>NCH_2\text{-}(X\text{-}CHR\text{-}CO)_n,OCH_2]_{c'}[>NCH_2\text{-}(X\text{-}$$

$$CHR\text{-}CO)_m,OCH_2]_{b'}[ROCH_2]_{a'}C\text{-}CH_2OCH_2C[CH_2OH]_a[CH_2O(COCHR\text{-}X)_m\text{-}$$

$$CH_2N<]_b[CH_2O(COCHR\text{-}X)_n\text{- }CH_2N<]_c[CH_2O(COCHR\text{-}X)_p\text{- }CH_2N<]_d \quad\quad (VI)$$

where R is -H or $C_1$ - $C_4$ alkyl groups which may alternate randomly; X is oxygen or sulfur which may alternate randomly; a, a' ≤ 2; and b, b', c, c', d, and d' are zero or a number from 1 to 3 where a+b+c+d+a'+b'+c'+d'=6; and m, m', n, n', p, and p' are independent values from 1 to 20.

4.   A microcapsule according to claim 3 in which the wall containing the ester moiety has the formula

$$C[CH_2OH]_a[CH_2O(COCHR\text{-}X)_m\text{- }CH_2N<]_b[CH_2O(COCHR\text{-}X)_n\text{- }CH_2N<]_c$$

$$[CH_2O(COCHR\text{-}X)_p\text{- }CH_2N<]_d\ [CH_2O(COCHR\text{-}X)_q\text{- }CH_2N<]_e \quad\quad (V)$$

and a is zero.

5.   A microcapsule according to claim 4 in which R comprises hydrogen.

6.   A microcapsule according to claim 1 in which the hydrolyzable ester moiety is derived from a cross-linking agent produced by the reaction of pentaerythritol, dipentaerythritol, trimethylolpropane, glycerol, mercaptoethanol, 1, 2, 4-butanetriol, 1, 3, 5-cyclohexanetriol, 1, 2, 3-heptanetriol, sorbitol, or 2,3-dimercapto-1-propanol with a 2-(hydroxy or thiol) substituted $C_2$-$C_6$ alkanoic acid.

7.   A microcapsule according to claim 6 in which the ester moiety is derived from a cross-linking agent produced by the reaction of pentaerythritol or dipentaerythritol with the alkanoic acid.

8.   A microcapsule according to Claim 3 in which the alkanoic acid is selected from glycolic aid, mercaptoacetic acid, lactic acid, , thiolactic acid, and the cyclic dimer of lactic acid.

9.   A microcapsule according to Claim 3 in which the wall containing the ester has the formula (V) and is derived from a cross-linking agent prepared by reaction of pentaerythritol with glycolic and mercaptoacetic acids in a molar ratio of 1:2:2 respectively.

10.  A microcapsule according to Claim 3 in which the wall containing the ester has the formula (V) and is derived from a cross-linking agent prepared by reaction of pentaerythritol with mercaptoacetic acid in a molar ratio of 1:4.

**11.** A microcapsule according to Claim 3 in which the wall containing the ester has the formula (V) and is derived from a cross-linking agent prepared by reaction of pentaerythritol with glycolic and mercaptoacetic acids in a molar ratio of 1:1:3 respectively.

**12.** A microcapsule according to Claim 3 in which the wall containing the ester has the formula (VI) and is derived from a cross-linking agent prepared by reaction of dipentaerythritol with thiolactic acid in a molar ratio of 1:6.

**13.** A microcapsule according to claim 6 in which the wall is produced by a microencapsulation process comprising in situ condensation of an amino resin prepolymer and in which the prepolymer is reacted with the cross-linking agent.

**14.** A microcapsule according to claim 13 in which the amino resin prepolymer is a urea-formaldehyde or a melamine-formaldehyde prepolymer.

**15.** A microcapsule according to claim 14 in which the prepolymer is an etherified urea-formaldehyde or melamine-formaldehyde prepolymer.

**16.** A microcapsule according to claim 1 which is stable under neutral or mildly acidic conditions.

**17.** A microcapsule according to claim 1 in which the encapsulated material comprises one or more agricultural chemicals.

**18.** A microcapsule according to claim 1 in which the encapsulated material comprises one or more agricultural or non-agricultural pesticides.

**19.** A microcapsule according to claim 18 in which the encapsulated material comprises one or more insecticides.

**20.** A microcapsule according to claim 19 in which the encapsulated material comprises one or more pyrethroid insecticides.

**21.** A microcapsule according to claim 19 in which the encapsulated material comprises lambda-cyhalothrin.

**22.** A microcapsule according to claim 19 in which the encapsulated material comprises one or more insecticides effective as stomach poisons.

**23.** A microcapsule according to claim 19 in which the encapsulated material comprises one or more organophosphorus insecticides.

**24.** A microcapsule according to claim 23 in which the encapsulated ingredient comprises chlorpyrifos.

**25.** A microcapsule according to claim 1 in which the ester moiety comprises from about 5 to about 80 percent by weight of the shell wall.

**26.** A microcapsule according to claim 1 in which the shell wall comprises from about 1 to about 70 percent by weight of the microcapsule.

**27.** A microcapsule according to claim 1 in which the shell wall comprises from about 5 to about 50 percent by weight of the microcapsule.

**28.** A microcapsule according to claim 1 having an average diameter of from about 1 to about 100 microns.

**29.** An aqueous suspension of microcapsules wherein the microcapsules are as defined in claim 1.

**30.** An aqueous suspension of microcapsules according to claim 29 wherein the aqueous phase further comprises a phase transfer catalyst.

**31.** An aqueous suspension of microcapsules according to claim 29 in which a pesticide is contained in the microcapsules and in the aqueous phase.

**32.** An aqueous suspension of microcapsules according to claim 29 wherein the encapsulated ingredient comprises a pesticide and the aqueous phase contains a second pesticide.

**33.** An aqueous suspension of microcapsules according to claim 32 in which the encapsulated pesticide is substantially incompatible with the second pesticide.

**34.** A composition comprising a microcapsule according to claim 1 and a basic substance.

**35.** A composition according to claim 34 in which the basic substance is selected from alkali and alkaline earth metal hydroxides, ammonium hydroxide, quaternary ammonium hydroxides, and amines.

**36.** A combination package comprising a first compartment containing microcapsules according to claim 1 and a second compartment comprising a basic substance.

**37.** A combination package according to claim 36 in which the first compartment contains an aqueous suspension of microcapsules.

**38.** A combination package according to claim 36 in which the basic substance is selected from alkali and alkaline earth metal hydroxides, ammonium hydroxide, quaternary ammonium hydroxides, and amines.

**39.** A method of controlling a pest comprising applying to the pest, to the locus of the pest, or to a location in which the pest may be present, a composition comprising a microcapsule according to claim 1 in which the encapsulated ingredient comprises a pesticide, said composition being applied in a pesticidally effective amount.

**40.** A method according to claim 39 in which the pest is selected from undesirable vegetation, insects, acarids, mites and rodents.

**41.** A method according to claim 39 in which the microcapsules are placed in a basic environment such that cause cleavage of the ester moiety occurs, resulting in breakdown of the capsule walls.

**42.** A method according to claim 39 in which the composition is a suspension which also comprises a basic substance selected from alkali and alkaline earth metal hydroxides, hydroxides of quaternary ammonium salts and amines.

**43.** A method according to claim 39 comprising applying to a locus at which insects feed, a microcapsule according to claim 1 containing an insecticide which is a stomach poison, the ester moiety being selected so as to produce relatively rapid disintegration or degradation of the microcapsule wall when in contact with an alkaline environment in an insect's gut.

**44.** A method according to claim 43 in which the hydrolyzable ester moiety is selected so as to produce disintegration or degradation of the microcapsule wall within approximately four hours or less.

**45.** A process for the production of microcapsules formed of an aminoplast shell wall and containing an encapsulated ingredient or ingredients comprising incorporating into the shell wall an ester moiety having the formula

$$\text{core}[(A_1\text{-}X)_tH]_{t'} \, [(A_2\text{-}X)_uH]_{u'} \, ...[(A_n\text{-}X)_yH]_{y'} \tag{I}$$

where "core" represents a structure derived from a multifunctional $C_1$-$C_{20}$ aliphatic or cycloaliphatic alcohol containing at least two functional groups capable of esterification; $A_1$-X-, $A_2$-X-, ...$A_n$-X- each constitute one or more randomly oligomerized esters of 2-(hydroxy) substituted $C_2$ - $C_6$ alkanoic acids and/or 2-thiol substituted $C_2$ - $C_6$ alkanoic acids, where XH represents the terminal alcohol or sulfhydryl capable of reacting with an amino-formaldehyde prepolymer; n is the number of functional groups on the core capable of reacting with derivatives of the 2-hydroxy and/or 2-thiol $C_2$ - $C_6$ substituted alkanoic acids; t, u ...y are independent values from 1-20; and $2 \le t' + u'..... + y' \le n$, wherein said process comprises the steps of

(a) preparing an organic solution which comprises the material to be encapsulated, an etherified amino resin prepolymer, and a cross-linking agent of formula (I);

(b) preparing an emulsion of the organic solution in a continuous phase aqueous solution which comprises water and a surface-active agent; and

(c) heating the emulsion to a temperature of about 20 °C to about 100 °C under conditions sufficient for in situ condensation of the resin prepolymer and cross-linking agent to form an aminoplast shell wall enclosing the encapsulated ingredient.

46. A process for the production of microcapsules according to claim 45 in which the hydrolyzable ester moiety is derived from pentaerythritol and has the formula

$$C[CH_2OH]_a[CH_2O(COCHR\text{-}X)_m\text{-}H]_b[CH_2O(COCHR\text{-}X)_n\text{-}H]_o[CH_2O(COCHR\text{-}X)p\text{-}H]d\ [CH_2O(COCHR\text{-}X)_q\text{-}H]_e \qquad (II)$$

where R is -H or $C_1$ - $C_4$ alkyl groups which may alternate randomly; X is oxygen or sulfur which may alternate randomly; $a \leq 2$; and b, c, d, e are zero or a number from 1 to 4, where a+b+c+d+e=4; and m, n, p, and q are independent values from 1 to 20, or

When dipentaerythritol is the reactant the cross-linking agents have the formula

$$[H\text{-}(X\text{-}CHR\text{-}CO)_{p'}OCH_2]_{d'}[H\text{-}(X\text{-}CHR\text{-}CO)_{n'}OCH_2]_{c'}[H\text{-}(X\text{-}CHR\text{-}CO)_{m'}OCH_2]_{b'}[HOCH_2]_{a'}C\text{-}CH_2OCH_2C[CH_2OH]_a[CH_2O(COCHR\text{-}X)_m\text{-}H]_b[CH_2O(COCHR\text{-}X)_n\text{-}H]_c\ [CH_2O(COCHR\text{-}X)_p\text{-}H]_d \qquad (III)$$

where R is -H or $C_1$ - $C_4$ alkyl groups which may alternate randomly; X is oxygen or sulfur which may alternate; a, $a' \leq 2$; and b, b', c, c', d, and d' are zero or a number from 1 to 3 where a+b+c+d+a'+b'+c'+d'=6; and m, m', n, n', p, and p' are independent values from 1 to 20.

47. A process according to claim 45 in which the aminoplast shell wall is formed from an etherified amino resin prepolymer.

48. A process according to claim 46 in which the amino resin prepolymer is a urea-formaldehyde or melamine-formaldehyde prepolymer.

49. A process according to claim 46 in which the amino resin prepolymer is a urea-formaldehyde prepolymer.

50. A process for producing a microcapsule having an aminoplast shell wall comprising

(i) reacting an etherified amino resin prepolymer with a cross-linking agent having the formula

$$core[(A_1\text{-}X)_tH]_{t'}[(A_2\text{-}X)_uH]_{u'}...[(A_n\text{-}X)_yH]_y, \qquad (I)$$

where "core" represents a structure derived from a multifunctional $C_1$-$C_{20}$ aliphatic or cycloaliphatic alcohol containing at least two functional groups capable of esterification; $A_1$-X-, $A_2$-X-, ...$A_n$-X- each constitute one or more randomly oligomerized esters of 2-(hydroxy or thiol) substituted $C_2$ - $C_6$ alkanoic acids and/or 2-thiol $C_2$ - $C_6$ alkanoic acids, where XH represents the terminal alcohol or sulfhydryl capable of reacting with an amino-formaldehyde prepolymer; t, u ...y are independent values from 1-20; and $2 \leq t' + u'..... + y' \leq n$; where n is the number of functional groups on the core capable of reacting with derivatives of the 2-hydroxy and/or 2-thiol $C_2$ - $C_6$ substituted alkanoic acids;

(ii) providing an organic phase comprising the product of step (i) and a material or materials to be encapsulated;

(iii) creating an emulsion of the organic phase in a continuous phase aqueous solution comprising water and a surface agent, wherein the emulsion comprises discrete droplets of the organic phase dispersed in the continuous phase aqueous solution, there being formed thereby an interface between the discrete droplets of organic solution and the surrounding continuous phase aqueous solution; and (iv) causing in situ condensation and curing of the amino resin prepolymer and the organic phase of the discreet droplets adjacent to the interface by simultaneously heating the emulsion to a temperature between about 20°C to about 100°C and adding to the emulsion an acidifying agent and maintaining the emulsion at a pH of between about 0 to about 4 for a sufficient period of time to allow substantial completion of in situ condensation of the amino resin prepolymer to convert the liquid droplets of the organic phase to capsules consisting of solid permeable polymer shells enclosing the material to be encapsulated.

51. A process according to claim 45 wherein the material to be encapsulated comprises one or more agricultural or non-agricultural pesticides.

**Patentansprüche**

1. Mikrokapsel, die aus einer Aminoplast-Hüllwand und einem verkapselten Bestandteil oder verkapselten Bestandteilen, der/die innerhalb der Wand eingeschlossen ist/sind, gebildet ist, wobei die Wand eine Ester-Einheit mit der folgenden Formel enthält:

$$\text{Kern}[(A_1\text{-X})_t CH_2 N<]_{t'}[(A_2\text{-X})_u CH_2 N<]_{u'}...[(A_n\text{-X})_y CH_2 N<]_{y'} \qquad \text{(IV)}$$

worin "Kern" aus einem multifunktionellen aliphatischen oder cycloaliphatischen $C_{1-20}$-Alkohol, der wenigstens zwei funktionelle Gruppen enthält, die zur Veresterung fähig sind, stammt; $(A_1\text{-X})_t$, $(A_2\text{-X})_u$,...$(A_n\text{-X})_y$ jeweils einen oder mehrere statistisch oligomerisierte Ester von 2-Hydroxy-substituierten $C_{2-6}$-Alkansäuren und/oder 2-Thiol-substituierten $C_{2-6}$-Alkansäuren darstellen, worin X Sauerstoff oder Schwefel darstellt; $-CH_2N<$ ein dreiwertiges Stickstofffragment des Amino-Formaldehyd-Vorpolymers darstellt; und n die Anzahl der funktionellen Gruppe an dem Kern ist, die zur Reaktion mit Derivaten der 2-Hydroxy- und/oder 2-Thiol-substituierten $C_{2-6}$-Alkansäuren fähig sind; t, u...y unabhängige Werte von 1 bis 20 sind; und $2 \leq t' + u'...+ y' \leq n$ ist.

2. Mikrokapsel gemäß Anspruch 1, worin der Alkohol wenigstens drei funktionelle Gruppen aufweist, die zur Veresterung fähig sind.

3. Mikrokapsel gemäß Anspruch 1, worin die Wand, die eine Ester-Einheit enthält, die folgende Formel hat:

$$C[CH_2OH]_a[CH_2O(COCHR\text{-X})_m\text{-}CH_2N<]_b[CH_2O(COCHR\text{-X})_n\text{-}CH_2N<]_c$$

$$[CH_2O(COCHR\text{-X})_p\text{-}CH_2N<]_d[CH_2O(COCHR\text{-X})_q\text{-}CH_2N<]_e \qquad \text{(V)}$$

worin R -H oder $C_{1-4}$-Alkyl-Gruppen ist, die statistisch abwechseln können; X Sauerstoff oder Schwefel ist, die statistisch abwechseln können; $a \leq 2$ ; und b, c, d, e Null oder eine Zahl von 1 bis 4 sind, worin a+b+c+d+e=4; und m, n, p und q unabhängige Werte von 1 bis 20 sind, oder

$$[>NCH_2\text{-}(X\text{-}CHR\text{-}CO)_p\text{,}OCH_2]_{d'}[>NCH_2\text{-}(X\text{-}CHR\text{-}CO)_n\text{,}OCH_2]_{c'} \ [>NCH_2\text{-}(X\text{-}CHR\text{-}$$

$$CO)_{m'}OCH_2]_{b'}[HOCH_2]_{a'}C\text{-}CH_2OCH_2C[CH_2OH]_a[CH_2O(COCHR\text{-X})_m\text{-}$$

$$CH_2N<]_b[CH_2O(COCHR\text{-X})_n\text{-}CH_2N<]_c[CH_2O(COCHR\text{-X})_p\text{-}CH_2N<]_d \qquad \text{(VI)}$$

worin R -H oder $C_{1-4}$-Alkyl-Gruppen ist, die statistisch abwechseln können; X Sauerstoff oder Schwefel ist, die statistisch abwechseln können; a, a' $\leq$ 2; und b, b', c, c', d und d' Null oder eine Zahl von 1 bis 3 sind, worin a+b+c+d+a'+b'+c'+d'=6; und m, m', n, n', p und p' unabhängige Werte von 1 bis 20 sind.

4. Mikrokapsel gemäß Anspruch 3, worin die Wand, die die Ester-Einheit enthält, die folgende Formel hat:

$$C[CH_2OH]_a[CH_2O(COCHR\text{-X})_m\text{-}CH_2N<]_b[CH_2O(COCHR\text{-X})_n\text{-}CH_2N<]_c$$

$$[CH_2O(COCHR-X)_p-CH_2N<]_d[CH_2O(COCHR-X)_q-CH_2N<]_e \qquad (V)$$

und a Null ist.

**5.** Mikrokapsel gemäß Anspruch 4, worin R Wasserstoff umfaßt.

**6.** Mikrokapsel gemäß Anspruch 1, worin die hydrolysierbare Ester-Einheit aus einem Vernetzungsmittel stammt, das durch die Reaktion von Pentaerythrit, Dipentaerythrit, Trimethylolpropan, Glycerin, Mercaptoethanol, 1,2,4-Butantriol, 1,3,5-Cyclohexantriol, 1,2,3-Heptantriol, Sorbit oder 2,3-Dimercapto-1-propanol mit einer 2-(Hydroxy oder Thiol)-substituierten $C_{2-6}$-Alkansäure hergestellt wird.

**7.** Mikrokapsel gemäß Anspruch 6, worin die Ester-Einheit aus einem Vernetzungsmittel stammt, das durch die Reaktion von Pentaerythrit oder Dipentaerythrit mit der Alkansäure hergestellt wird.

**8.** Mikrokapsel gemäß Anspruch 3, worin die Alkansäure aus Glycolsäure, Mercaptoessigsäure, Milchsäure, Thiomilchsäure und dem cyclischen Dimer von Milchsäure ausgewählt ist.

**9.** Mikrokapsel gemäß Anspruch 3, worin die Wand, die den Ester enthält, die Formel (V) hat und aus einem Vernetzungsmittel stammt, das durch die Reaktion von Pentaerythrit mit Glycol- und Mercaptoessigsäure in einem Molverhältnis von 1:2:2 hergestellt wird.

**10.** Mikrokapsel gemäß Anspruch 3, worin die Wand, die den Ester enthält, die Formel (V) hat und aus einem Vernetzungsmittel stammt, das durch Reaktion von Pentaerythrit mit Mercaptoessigsäure in einem Molverhältnis von 1:4 hergestellt wird.

**11.** Mikrokapsel gemäß Anspruch 3, worin die Wand, die den Ester enthält, die Formel (V) hat und aus einem Vernetzungsmittel stammt, das durch Reaktion von Pentaerythrit mit Glycol- und Mercaptoessigsäure in einem Molverhältnis von 1:1:3 hergestellt wird.

**12.** Mikrokapsel gemäß Anspruch 3, worin die Wand, die den Ester enthält, die Formel (VI) hat und aus einem Vernetzungsmittel stammt, das durch Reaktion von Dipentaerythrit mit Thiomilchsäure in einem Molverhältnis von 1:6 hergestellt wird.

**13.** Mikrokapsel gemäß Anspruch 6, worin die Wand durch ein Mikroverkapselungsverfahren hergestellt wird, das die Kondensation in situ eines Aminoharz-Vorpolymers umfaßt, und worin das Vorpolymer mit dem Vernetzungsmittel umgesetzt wird.

**14.** Mikrokapsel gemäß Anspruch 13, worin das Aminoharz-Vorpolymer ein Harnstoff-Formaldehyd- oder ein Melamin-Formaldehyd-Vorpolymer ist.

**15.** Mikrokapsel gemäß Anspruch 14, worin das Vorpolymer ein verethertes Harnstoff-Formaldehyd- oder Melamin-Formaldehyd-Vorpolymer ist.

**16.** Mikrokapsel gemäß Anspruch 1, die unter neutralen oder schwach sauren Bedingungen stabil ist.

**17.** Mikrokapsel gemäß Anspruch 1, worin das verkapselte Material eine oder mehrere landwirtschaftliche Chemikalien umfaßt.

**18.** Mikrokapsel gemäß Anspruch 1, worin das verkapselte Material eine oder mehrere landwirtschaftliche oder nicht-landwirtschaftliche Pestizide umfaßt.

**19.** Mikrokapsel gemäß Anspruch 18, worin das verkapselte Material ein oder mehrere Insektizide umfaßt.

**20.** Mikrokapsel gemäß Anspruch 19, worin das verkapselte Material ein oder mehrere Pyrethroid-Insektizide umfaßt.

**21.** Mikrokapsel gemäß Anspruch 19, worin das verkapselte Material lamda-Cyhalothrin umfaßt.

22. Mikrokapsel gemäß Anspruch 19, worin das verkapselte Material ein oder mehrere Insektizide, die als Magengifte wirksam sind, umfaßt.

23. Mikrokapsel gemäß Anspruch 19, worin das verkapselte Material ein oder mehrere Organophosphor-Insektizide umfaßt.

24. Mikrokapsel gemäß Anspruch 23, worin der verkapselte Bestandteil Chlorpyrifos umfaßt.

25. Mikrokapsel gemäß Anspruch 1, worin die Ester-Einheit ca. bis ca. 80 Gew.-% der Hüllwand umfaßt.

26. Mikrokapsel gemäß Anspruch 1, worin die Hüllwand ca. 1 bis 70 Gew.-% der Mikrokapsel umfaßt.

27. Mikrokapsel gemäß Anspruch 1, worin die Hüllwand ca. 5 bis ca. 50 Gew.-% der Mikrokapsel umfaßt.

28. Mikrokapsel gemäß Anspruch 1 mit einem durchschnittlichen Durchmesser von ca. 1 bis 100 μm.

29. Wäßrige Suspension von Mikrokapseln, worin die Mikrokapseln wie in Anspruch 1 definiert sind.

30. Wäßrige Suspension von Mikrokapseln gemäß Anspruch 29, worin die wäßrige Phase ferner einen PhasentransferKatalysator umfaßt.

31. Wäßrige Suspension von Mikrokapseln gemäß Anspruch 29, worin ein Pestizid in den Mikrokapseln und in der wäßrigen Phase enthalten ist.

32. Wäßrige Suspension von Mikrokapseln gemäß Anspruch 29, worin der verkapselte Bestandteil ein Pestizid umfaßt und die wäßrige Phase ein zweites Pestizid enthält.

33. Wäßrige Suspension von Mikrokapseln gemäß Anspruch 32, worin das verkapselte Pestizid im wesentlichen unverträglich mit dem zweiten Pestizid ist.

34. Zusammensetzung, die eine Mikrokapsel gemäß Anspruch 1 und eine basische Substanz umfaßt.

35. Zusammensetzung gemäß Anspruch 34, worin die basische Substanz aus Alkali- und Erdalkalimetallhydroxiden, Ammoniumhydroxid, quaternären Ammoniumhydroxiden und Aminen ausgewählt ist.

36. Kombinationspackung, die ein erstes Behältnis, das Mikrokapseln gemäß Anspruch 1 enthält, und ein zweites Behältnis umfaßt, das eine basische Substanz umfaßt.

37. Kombinationspackung gemäß Anspruch 36, worin das erste Behältnis eine wäßrige Suspension von Mikrokapseln enthält.

38. Kombinationspackung gemäß Anspruch 36, worin die basische Substanz aus Alkali- und Erdalkalimetallhydroxiden, Ammoniumhydroxid, quaternären Ammoniumhydroxiden und Aminen ausgewählt ist.

39. Verfahren zur Bekämpfung eines Schädlings, umfassend das Ausbringen, auf den Schädling, auf den Locus des Schädlings oder auf einen Ort, an dem der Schädling vorhanden sein kann, einer Zusammensetzung, die eine Mikrokapsel gemäß Anspruch 1 umfaßt, worin der verkapselte Bestandteil ein Pestizid umfaßt, wobei die Zusammensetzung in einer pestizid wirksamen Menge ausgebracht wird.

40. Verfahren gemäß Anspruch 39, worin der Schädling aus ungewünschter Vegetation, Insekten, Akariden, Milben und Nagetieren ausgewählt ist.

41. Verfahren gemäß Anspruch 39, worin die Mikrokapseln in eine basische Umgebung gebracht werden, so daß eine Spaltung der Ester-Einheit auftritt, was in einer Zersetzung der Kapselwände resultiert.

42. Verfahren gemäß Anspruch 39, worin die Zusammensetzung eine Suspension ist, die ebenfalls eine basische Substanz umfaßt, ausgewählt aus Alkali- und Erdalkalimetallhydroxiden, Hydroxiden von quaternären Ammoniumsalzen und Aminen.

**43.** Verfahren gemäß Anspruch 39, umfassend das Ausbringen, auf einen Locus, an dem sich Insekten ernähren, einer Mikrokapsel gemäß Anspruch 1, die ein Insektizid enthält, das ein Magengift ist, wobei die Ester-Einheit so ausgewählt ist, daß eine relativ schnelle Zersetzung oder ein relativ schneller Abbau der Mikrokapselwand erzeugt wird, wenn sie in Kontakt mit einer alkalischen Umgebung im Darm eines Insekts ist.

**44.** Verfahren gemäß Anspruch 43, worin die hydrolysierbare Ester-Einheit ausgewählt wird, um eine Zersetzung oder einen Abbau der Mikrokapselwand innerhalb von etwa 4 Stunden oder weniger zu erzeugen.

**45.** Verfahren zur Herstellung von Mikrokapseln, die aus einer Aminoplast-Hüllwand gebildet sind und einen verkapselten Bestandteil oder verkapselte Bestandteile enthalten, umfassend das Einführen einer Ester-Einheit mit der folgenden Formel in die Hüllwand:

$$\text{Kern}[(A_1\text{-}X)_tH]_{t'}[(A_2\text{-}X)_uH]_{u'}...[(A_n\text{-}X)_yH]_{y'} \qquad (I)$$

worin "Kern" eine aus einem multifunktionellen aliphatischen oder cycloaliphatischen $C_{1-20}$-Alkohol, der wenigstens zwei funktionelle Gruppen enthält, die zur Veresterung fähig sind, stammende Struktur darstellt; $A_1$-X-, $A_2$-X-, ...$A_n$-X- jeweils einen oder mehrere statistisch oligomerisierte Ester von 2-(Hydroxy)-substituierten $C_{2-6}$-Alkansäuren und/oder 2-Thiol-substituierten $C_{2-6}$-Alkansäuren darstellen, worin XH den terminalen Alkohol oder das terminale Sulfhydryl darstellt, die zur Reaktion mit einem Amino-Formaldehyd-Vorpolymer fähig sind; n die Anzahl der funktionellen Gruppen am Kern ist, die zur Reaktion mit Derivaten der 2-Hydroxy- und/oder 2-Thiol-substituierten $C_{2-6}$-Alkansäuren fähig sind; t, u...y unabhängige Werte von 1 bis 20 sind; und $2 \leq t' + u'...+ y' \leq n$ ist, worin das Verfahren die folgenden Schritte umfaßt:

(a) Herstellen einer organischen Lösung, die das zu verkapselnde Material, ein verethertes Aminoharz-Vorpolymer und ein Vernetzungsmittel der Formel (I) umfaßt;

(b) Herstellung einer Emulsion der organischen Lösung in einer wäßrigen Lösung als kontinuierliche Phase, die Wasser und ein Tensid umfaßt; und

(c) Erwärmen der Emulsion auf eine Temperatur von ca. 20 bis ca. 100°C unter Bedingungen, die zur Kondensation des Harz-Vorpolymers und Vernetzungsmittels in situ ausreichend sind, um eine Aminoplast-Hüllwand zu bilden, die den verkapselten Bestandteil umschließt.

**46.** Verfahren zur Herstellung von Mikrokapseln gemäß Anspruch 45, worin die hydrolysierbare Ester-Einheit aus Pentaerythrit stammt und die folgende Formel hat:

$$C[CH_2OH]_a[CH_2O(COCHR\text{-}X)_m\text{-}H]_b[CH_2O(COCHR\text{-}X)_n\text{-}H]_c$$

$$[CH_2O(COCHR\text{-}X)_p\text{-}H]_d[CH_2O(COCHR\text{-}X)_q\text{-}H]_e \qquad (II)$$

worin R -H oder $C_{1-4}$-Alkyl-Gruppen ist, die statistisch abwechseln können; X Sauerstoff oder Schwefel ist, die statistisch abwechseln können; $a \leq 2$; und b, c, d, e Null oder eine Zahl von 1 bis 4 sind, worin a+b+c+d+e=4; und m, n, p und q unabhängige Werte von 1 bis 20 sind, oder
wenn Dipentaerythrit der Reaktand ist, die Vernetzungsmittel die folgende Formel haben:

$$[H\text{-}(X\text{-}CHR\text{-}CO)_p\text{'}OCH_2]_{d'}[H\text{-}(X\text{-}CHR\text{-}CO)_{n'}OCH_2]_{c'}[H\text{-}(X\text{-}CHR\text{-}}$$

$$CO)_{m'}OCH_2]_{b'}[HOCH_2]_{a'}C\text{-}CH_2OCH_2C[CH_2OH]_a[CH_2O(COCHR\text{-}X)_m\text{-}}$$

$$H]_b[CH_2O(COCHR\text{-}X)_n\text{-}H]_c[CH_2O(COCHR\text{-}X)_p\text{-}H]_d \qquad (III)$$

worin R -H oder $C_{1-4}$-Alkyl-Gruppen ist, die statistisch abwechseln können; X Sauerstoff oder Schwefel ist, die statistisch abwechseln können; a, a' $\leq 2$; und b, b', c, c', d und d' Null oder eine Zahl von 1 bis 3 sind, worin a+b+c+d+a'+b'+c'+d'=6; und m, m', n, n', p und p' unabhängige Werte von 1 bis 20 sind.

**47.** Verfahren gemäß Anspruch 45, worin die Aminopolast-Hüllwand aus einem veretherten Aminoharz-Vorpolymer gebildet wird.

**48.** Verfahren gemäß Anspruch 46, worin das Aminoharz-Vorpolymer ein Harnstoff-Formaldehyd- oder MelaminFormaldehyd-Vorpolymer ist.

**49.** Verfahren gemäß Anspruch 46, worin das Aminoharz-Vorpolymer ein Harnstoff-Formaldehyd-Vorpolymer ist.

**50.** Verfahren zur Herstellung einer Mikrokapsel mit einer Aminoplast-Hüllwand, umfassend

(i) Umsetzen eines veretherten Aminoharz-Vorpolymers mit einem Vernetzungsmittel mit der folgenden Formel:

$$\text{Kern}[(A_1\text{-}X)_tH]_{t'}[(A_2\text{-}X)_uH]_{u'}...[(A_n\text{-}X)_yH]_y, \tag{I}$$

worin "Kern" eine Struktur darstellt, die aus einem multifunktionellen aliphatischen oder cycloaliphatischen $C_{1\text{-}20}$-Alkohol stammt, der wenigstens zwei funktionelle Gruppen enthält, die zur Veresterung fähig sind; $A_1$-X-, $A_2$-X-, ...$A_n$-X- jeweils einen oder mehrere statistisch oligomerisierte Ester von 2-(Hydroxy oder Thiol)-substituierten $C_{2\text{-}6}$-Alkansäuren und/oder 2-Thiol-$C_{2\text{-}6}$-alkansäuren darstellen, worin XH den terminalen Alkohol oder das terminale Sulfhydryl darstellt, die zur Reaktion mit einem Amino-Formaldehyd-Vorpolymer fähig sind; t, u ...y unabhängige Werte von 1 bis 20 sind; und $2 \leq t' + u'... + y' \leq n$; worin n die Anzahl funktioneller Gruppen am Kern ist, die zur Reaktion mit Derivaten der 2-Hydroxy- und/oder 2-Thiol-substituierten $C_{2\text{-}6}$-Alkansäuren fähig sind;

(ii) Bereitstellen einer organischen Phase, die das Produkt aus Schritt (i) und ein zu verkapselndes Material oder zu verkapselnde Materialien umfaßt; (iii) Bilden einer Emulsion der organischen Phase in einer wäßrigen Lösung als kontinuierliche Phase, die Wasser und ein Tensid umfaßt, worin die Emulsion diskrete Tröpfchen der in der wäßrigen Lösung als kontinuierliche Phase dispergierten organischen Phase umfaßt, wodurch eine Grenzfläche zwischen den diskreten Tröpfchen der organischen Lösung und der umgebenden kontinuierlichen Phase der wäßrigen Lösung gebildet wird; und (iv) Durchführen einer Kondensation in situ und Härten des Aminoharz-Vorpolymers und der organischen Phase der zur Grenzfläche benachbarten diskreten Tröpfchen durch gleichzeitiges Erwärmen der Emulsion auf eine Temperatur zwischen ca. 20 und ca. 100°C und Zugabe eines Ansäurerungsmittels zur Emulsion und Halten der Emulsion bei einem pH zwischen ca. 0 und ca. 4 für einen ausreichenden Zeitraum, um eine wesentliche Vollendung der Kondensation in situ des Aminoharz-Vorpolymers zu erlauben, um die flüssigen Tröpfchen der organischen Phase zu Kapseln umzuwandeln, die aus festen durchlässigen Polymerhüllen bestehen, die das zu verkapselnde Material einschließen.

**51.** Verfahren gemäß Anspruch 45, worin das zu verkapselnde Material ein oder mehrere landwirtschaftliche oder nicht-landwirtschaftliche Pestizide umfaßt.

**Revendications**

**1.** Microcapsule constituée par une paroi d'enveloppe d'aminoplaste et un ou des ingrédients encapsulés entourés par la paroi, la paroi contenant une entité ester ayant la formule :

$$\text{noyau } [(A_1\text{-}X)_t CH_2N<]_{t'}[(A_2\text{-}X)_u CH_2N<]_{u'}...[(A_n\text{-}X)_y CH_2N<]_{y'} \tag{IV}$$

où "noyau" est dérivé d'un alcool aliphatique ou cycloaliphatique en $C_1\text{-}C_{20}$ multifonctionnel contenant au moins deux groupes fonctionnels capables d'estérification ; $(A_1\text{-}X)_t$, $(A_2\text{-}X)_u$,... $(A_n\text{-}X)_y$ constituent chacun un ou plusieurs esters oligomérisés de manière aléatoire d'acides alcanoïques en $C_2\text{-}C_6$ 2-hydroxy-substitués et/ou d'acides alcanoïques en $C_2\text{-}C_6$ 2-thiol-substitués, où X représente l'oxygène ou le soufre ; -$CH_2N<$ représente un fragment azoté trivalent du prépolymère amino-formaldéhyde ; et n est le nombre de groupes fonctionnels sur le noyau capables de réagir avec des dérivés des acides alcanoïques en $C_2\text{-}C_6$ 2-hydroxy- et/ou 2-thiol-substitués ; t, u... y sont des valeurs indépendantes de 1 à 20 ; et $2 \leq t' + u'...+y' \leq n$.

**2.** Microcapsule selon la revendication 1, où l'alcool a au moins trois groupes fonctionnels capables d'estérification.

**3.** Microcapsule selon la revendication 1, où la paroi contenant une entité ester a la formule

$$C[CH_2OH]_a[CH_2O(COCHR-X)_m-CH_2N<]_b[CH_2O(COCHR-X)_n-$$

$$CH_2N<]_c[CH_2O(COCHR-X)_p-CH_2N<]_d[CH_2O(COCHR-X)_q-CH_2N<]_e \qquad (V)$$

où R est -H ou des groupes alkyle en $C_1$-$C_4$ qui peuvent alterner de manière aléatoire ; X est l'oxygène ou le soufre qui peuvent alterner de manière aléatoire ; $a \leq 2$ ; et b, c, d, e sont 0 ou un nombre de 1 à 4, où a+b+c+d+e = 4 ; et m, n, p et q sont des valeurs indépendantes de 1 à 20
ou

$$[>NCH_2-(X-CHR-CO)_{p'}\cdot OCH_2]_{d'}[>NCH_2-(X-CHR-CO)_{n'}\cdot OCH_2]_{c'}[>NCH_2-(X-$$

$$CHR-CO)_{m'}\cdot OCH_2]_{b'}[HOCH_2]_{a'}\cdot C-CH_2OCH_2C[CH_2OH]_a[CH_2O(COCHR-X)_m-$$

$$CH_2N<]_b[CH_2O(COCHR-X)_n-CH_2N<]_c[CH_2O(COCHR-X)_p-CH_2N<]_d \qquad (VI)$$

où R est -H ou des groupes alkyle en $C_1$-$C_4$ qui peuvent alterner de manière aléatoire ; X est l'oxygène ou le soufre qui peuvent alterner de manière aléatoire ; a, a' $\leq$ 2 ; et b, b', c, c', d et d' sont 0 ou un nombre de 1 à 3 où a+b+c+d+a'+b'+c'+d' = 6 ; et m, m', n, n', p et p' sont des valeurs indépendantes de 1 à 20.

**4.** Microcapsule selon la revendication 3, où la paroi contenant l'entité ester a la formule

$$C[CH_2OH]_a[CH_2O(COCHR-X)_m-CH_2N<]_b[CH_2O(COCHR-X)_n-$$

$$CH_2N<]_c[CH_2O(COCHR-X)_p-CH_2N<]_d[CH_2O(COCHR-X)_q-CH_2N<]_e \qquad (V)$$

et a est zéro.

**5.** Microcapsule selon la revendication 4, où R comprend l'hydrogène.

**6.** Microcapsule selon la revendication 1, où l'entité ester hydrolysable est dérivée d'un agent de réticulation produit par la réaction du pentaérythritol, du dipentaérythritol, du triméthylolpropane, du glycérol, du mercaptoéthanol, du 1,2,4-butanetriol, du 1,3,5-cyclohexanetriol, du 1,2,3-heptanetriol, du sorbitol ou du 2,3-dimercapto-1-propanol avec un acide alcanoïque en $C_2$-$C_6$ 2-(hydroxy ou thiol)-substitué.

**7.** Microcapsule selon la revendication 6, où l'entité ester est dérivée d'un agent de réticulation produit par la réaction du pentaérythritol ou du dipentaérythritol avec l'acide alcanoïque.

**8.** Microcapsule selon la revendication 3, où l'acide alcanoïque est choisi parmi l'acide glycolique, l'acide mercaptoacétique, l'acide lactique, l'acide thiolactique et le dimère cyclique de l'acide lactique.

**9.** Microcapsule selon la revendication 3, où la paroi contenant l'ester a la formule (V) et est dérivée d'un agent de réticulation préparé par la réaction du pentaérythritol avec les acides glycolique et mercaptoacétique dans un rapport molaire de 1:2:2 respectivement.

**10.** Microcapsule selon la revendication 3, où la paroi contenant l'ester a la formule (V) et est dérivée d'un agent de réticulation préparé par la réaction du pentaérythritol avec l'acide mercaptoacétique dans un rapport molaire de 1:4.

**11.** Microcapsule selon la revendication 3, où la paroi contenant l'ester a la formule (V) et est dérivée d'un agent de réticulation préparé par la réaction du pentaérythritol avec les acides glycolique et mercaptoacétique dans un rapport molaire de 1:1:3 respectivement.

**12.** Microcapsule selon la revendication 3, où la paroi contenant l'ester a la formule (VI) et est dérivée d'un agent de réticulation préparé par la réaction du dipentaérythritol avec l'acide thiolactique dans un rapport molaire de 1:6.

**13.** Microcapsule selon la revendication 6, où la paroi est produite par un procédé de microencapsulation comprenant la condensation in situ d'un prépolymère de résine amino et où le prépolymère est mis à réagir avec l'agent de réticulation.

**14.** Microcapsule selon la revendication 13, où le prépolymère de résine amino est un prépolymère urée-formaldéhyde ou mélamine-formaldéhyde.

**15.** Microcapsule selon la revendication 14, où le prépolymère est un prépolymère urée-formaldéhyde ou mélamine-formaldéhyde éthérifié.

**16.** Microcapsule selon la revendication 1 qui est stable dans des conditions neutres ou faiblement acides.

**17.** Microcapsule selon la revendication 1, où le produit encapsulé comprend un ou plusieurs produits chimiques agricoles.

**18.** Microcapsule selon la revendication 1, où le produit encapsulé comprend un ou plusieurs pesticides agricoles ou non agricoles.

**19.** Microcapsule selon la revendication 18, où le produit encapsulé comprend un ou plusieurs insecticides.

**20.** Microcapsule selon la revendication 19, où le produit encapsulé comprend un ou plusieurs insecticides pyréthroïdes.

**21.** Microcapsule selon la revendication 19, où le produit encapsulé comprend de la lambda-cyhalothrine.

**22.** Microcapsule selon la revendication 19, où le produit encapsulé comprend un ou plusieurs insecticides efficaces comme poisons stomacaux.

**23.** Microcapsule selon la revendication 19, où le produit encapsulé comprend un ou plusieurs insecticides organophosphorés.

**24.** Microcapsule selon la revendication 23, où l'ingrédient encapsulé comprend le chlorpyrifos.

**25.** Microcapsule selon la revendication 1, où l'entité ester constitue d'environ 5 à environ 80 % en masse de la paroi d'enveloppe.

**26.** Microcapsule selon la revendication 1, où la paroi d'enveloppe constitue d'environ 1 à environ 70 % en masse de la microcapsule.

**27.** Microcapsule selon la revendication 1, où la paroi d'enveloppe constitue d'environ 5 à environ 50 % en masse de la microcapsule.

**28.** Microcapsule selon la revendication 1 ayant un diamètre moyen d'environ 1 à environ 100 µm.

**29.** Suspension aqueuse de microcapsules où les microcapsules sont telles que définies dans la revendication 1.

**30.** Suspension aqueuse de microcapsules selon la revendication 29, où la phase aqueuse comprend en outre un catalyseur de transfert de phase.

**31.** Suspension aqueuse de microcapsules selon la revendication 29, où un pesticide est contenu dans les microcapsules et dans la phase aqueuse.

**32.** Suspension aqueuse de microcapsules selon la revendication 29, où l'ingrédient encapsulé comprend un pesticide et la phase aqueuse contient un second pesticide.

**33.** Suspension aqueuse de microcapsules selon la revendication 32, où le pesticide encapsulé est sensiblement incompatible avec le second pesticide.

**34.** Composition comprenant une microcapsule selon la revendication 1 et une substance basique.

**35.** Composition selon la revendication 34, où la substance basique est choisie parmi les hydroxydes alcalins et alcalino-terreux, l'hydroxyde d'ammonium, les hydroxydes d'ammonium quaternaire et les amines.

**36.** Conditionnement combiné comprenant un premier compartiment contenant des microcapsules selon la revendication 1 et un second compartiment comprenant une substance basique.

**37.** Conditionnement combiné selon la revendication 36, où le premier compartiment contient une suspension aqueuse de microcapsules.

**38.** Conditionnement combiné selon la revendication 36, où la substance basique est choisie parmi les hydroxydes alcalins et alcalino-terreux, l'hydroxyde d'ammonium, les hydroxydes d'ammonium quaternaire et les amines.

**39.** Procédé de lutte contre un nuisible comprenant l'application au nuisible, au site du nuisible ou à un endroit où le nuisible peut être présent, d'une composition comprenant une microcapsule selon la revendication 1 où l'ingrédient encapsulé comprend un pesticide, ladite composition étant appliquée en une quantité efficace du point de vue pesticide.

**40.** Procédé selon la revendication 39, où le nuisible est choisi parmi les végétaux, les insectes, les acariens, les mites et les rongeurs indésirables.

**41.** Procédé selon la revendication 39, où les microcapsules sont placées dans un environnement basique, de sorte qu'il se produit un clivage des entités ester qui conduit à une rupture des parois des capsules.

**42.** Procédé selon la revendication 39, où la composition est une suspension qui comprend aussi une substance basique choisie parmi les hydroxydes alcalins et alcalino-terreux, les hydroxydes de sels d'ammonium quaternaire et les amines.

**43.** Procédé selon la revendication 39 comprenant l'application à un site où des insectes se nourrissent d'une microcapsule selon la revendication 1 contenant un insecticide qui est un poison stomacal, l'entité ester étant choisie de manière à produire une désintégration ou dégradation relativement rapide de la paroi de la microcapsule quand elle est en contact avec un environnement alcalin dans l'intestin d'un l'insecte.

**44.** Procédé selon la revendication 43, où l'entité ester hydrolysable est choisie de manière à produire une désintégration ou dégradation de la paroi de la microcapsule en approximativement 4 h ou moins.

**45.** Procédé de production de microcapsules constituées par une paroi d'enveloppe d'aminoplaste et contenant un ou des ingrédients encapsulés comprenant l'incorporation dans la paroi d'enveloppe d'une entité ester ayant la formule

$$\text{noyau}[(A_1\text{-}X)_t H]_{t'}[(A_2\text{-}X)_u H]_{u'}...(A_n\text{-}X)_y H]_{y'} \qquad (I)$$

où "noyau" représente une structure dérivée d'un alcool aliphatique ou cycloaliphatique en $C_1$-$C_{20}$ multifonctionnel contenant au moins deux groupes fonctionnels capables d'estérification ; $A_1$-X-, $A_2$-X-, ...$A_n$-X-constituent chacun un ou plusieurs esters oligomérisés de manière aléatoire d'acides alcanoïques en $C_2$-$C_6$ 2-(hydroxy)-substitués et/ou d'acides alcanoïques en $C_2$-$C_6$ 2-thiol-substitués, où XH représente l'alcool ou le sulfhydryle terminal capable de réagir avec un prépolymère amino-formaldéhyde ; n est le nombre de groupes fonctionnels sur le noyau capables de réagir avec des dérivés des acides alcanoïques en $C_2$-$C_6$ 2-hydroxy- et/ou 2-thiol- substitués ; t, u...y sont des valeurs indépendantes de 1-20 ; et $2 \leq t' + u'...+y' \leq n$, où ledit procédé comprend les étapes de

(a) préparation d'une solution organique qui comprend le produit à encapsuler, un prépolymère de résine amino éthérifié et un agent de réticulation de formule (I) ;

(b) préparation d'une émulsion de la solution organique dans une solution aqueuse en phase continue qui comprend. de l'eau et un agent tensioactif ; et

(c) chauffage de l'émulsion à une température d'environ 20°C à environ 100°C dans des conditions suffisantes pour la condensation in situ du prépolymère de résine et de l'agent de réticulation pour former une paroi d'enveloppe d'aminoplaste entourant l'ingrédient encapsulé.

**46.** Procédé de production de microcapsules selon la revendication 45, où l'entité ester hydrolysable est dérivée du pentaérythritol et a la formule

$$C[CH_2OH]_a[CH_2O(COCHR-X)_m-H]_b[CH_2O(COCHR-X)_n-H]_c[CH_2O(COCHR-X)_p-$$

$$H]_d[CH_2O(COCHR-X]_q-H]_e \tag{II}$$

où R est -H ou des groupes alkyle en $C_1$ à $C_4$ qui peuvent alterner de manière aléatoire ; X est l'oxygène ou le soufre qui peuvent alterner de manière aléatoire ; $a \leq 2$ ; et b, c, d, e sont 0 ou un nombre de 1 à 4, où a+b+c+d+e=4 ; et m, n, p et q sont des valeurs indépendantes de 1 à 20,
ou bien
quand le dipentaérythritol est le réactif, les agents de réticulation ont la formule

$$[H-(X-CHR-CO)_{p'}OCH_2]_{d'}[H-(X-CHR-CO)_{n'}OCH_2]_{c'}[H-(X-CHR-$$

$$CO)_{m'}OCH_2]_{b'}[HOCH_2]_{a'}C-CH_2OCH_2C[CH_2OH]_a[CH_2O(COCHR-X)_m-$$

$$H]_b[CH_2O(COCHR-X)_n-H]_c[CH_2O(COCHR-X)_p-H]_d \tag{III}$$

où R est -H ou des groupes alkyle en $C_1$-$C_4$ qui peuvent alterner de manière aléatoire ; X est l'oxygène ou le soufre qui peuvent alterner ; a, a' $\leq$ 2 ; et b, b', c, c', d et d' sont 0 ou un nombre de 1 à 3 où a+b+c+d+a'+b'+c'+d' = 6 ; et m, m', n, n', p et p' sont des valeurs indépendantes de 1 à 20.

**47.** Procédé selon la revendication 45, où la paroi d'enveloppe d'aminoplaste est formée à partir d'un prépolymère de résine amino éthérifié.

**48.** Procédé selon la revendication 46, où le prépolymère de résine amino est un prépolymère urée-formaldéhyde ou mélamine-formaldéhyde.

**49.** Procédé selon la revendication 46, où le prépolymère de résine amino est un prépolymère urée-formaldéhyde.

**50.** Procédé pour produire une microcapsule ayant une paroi d'enveloppe d'aminoplaste comprenant

(i) la réaction d'un prépolymère de résine amino éthérifié avec un agent de réticulation ayant la formule

$$noyau[(A_1-X)_tH]_{t'}[(A_2-X)_uH]_{u'}...[(A_n-X)_yH]_{y'} \tag{I}$$

où "noyau" représente une structure dérivée d'un alcool aliphatique ou cycloaliphatique en $C_1$-$C_{20}$ multifonctionnel contenant au moins deux groupes fonctionnels capables d'estérification; $A_1$-X-, $A_2$-X-, ...$A_n$-X-constituent chacun un ou plusieurs esters oligomérisés de manière aléatoire d'acides alcanoïques en $C_2$-$C_6$ 2-(hydroxy ou thiol)-substitués et/ou d'acides alcanoïques en $C_2$-$C_6$ 2-thiol, où XH représente l'alcool ou le sulfhydryle terminal capable de réagir avec un prépolymère amino-formaldéhyde ; t, u,...y sont des valeurs indépendantes de 1-20 ; et $2 \leq t' + u'...+ y' \leq n$ ; où n est le nombre de groupes fonctionnels sur le noyau capables de réagir avec des dérivés des acides alcanoïques en $C_2$-$C_6$ 2-hydroxy- et/ou 2-thiol-substitués ;

(ii) la fourniture d'une phase organique comprenant le produit de l'étape (i) et un ou des produits à encapsuler ;

(iii) la création d'une émulsion de la phase organique dans une solution aqueuse en phase continue comprenant de l'eau et un agent tensioactif, où l'émulsion comprend des gouttelettes discrètes de la phase organique dispersées dans la solution aqueuse en phase continue, de sorte qu'il se forme une interface entre les gouttelettes discrètes de solution organique et la solution aqueuse en phase continue environnante ; et (iv) la condensation in situ et la réticulation du prépolymère de résine amino et de la phase organique des gouttelettes discrètes en position adjacente à l'interface simultanément par chauffage de l'émulsion à une température située entre environ 20°C et environ 100°C et addition à l'émulsion d'un agent acidifiant et maintien de l'émulsion à un pH situé entre environ 0 et environ 4 pendant une durée suffisante pour permettre l'achèvement sensible de la condensation in situ du prépolymère de résine amino pour convertir les gouttelettes liquides de la phase organique en capsules consistant en enveloppes polymères perméables solides entourant le produit à encapsuler.

51. Procédé selon la revendication 45, où le produit à encapsuler comprend un ou plusieurs pesticides agricoles ou non agricoles.